(19) Europäisches Patentamt
European Patent Office
Office européen des brevets

(11) **EP 3 284 794 B1**

(12) **EUROPEAN PATENT SPECIFICATION**

(45) Date of publication and mention
of the grant of the patent:
**02.12.2020 Bulletin 2020/49**

(21) Application number: **16779772.9**

(22) Date of filing: **13.04.2016**

(51) Int Cl.:
*C09J 175/08* (2006.01)          *B32B 27/40* (2006.01)
*B65D 65/40* (2006.01)          *C08G 18/48* (2006.01)
*C09J 11/02* (2006.01)          *C08G 18/76* (2006.01)
*C08G 18/10* (2006.01)          *C08G 18/12* (2006.01)
*C08G 18/32* (2006.01)          *C08G 18/42* (2006.01)

(86) International application number:
**PCT/JP2016/002003**

(87) International publication number:
**WO 2016/166978 (20.10.2016 Gazette 2016/42)**

(54) **ADHESIVE COMPOSITION AND LAYERED BODY USING SAME**

HAFTZUSAMMENSETZUNG UND SCHICHTKÖRPER DAMIT

COMPOSITION ADHÉSIVE ET CORPS LAMELLAIRE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2015 JP 2015084687**

(43) Date of publication of application:
**21.02.2018 Bulletin 2018/08**

(73) Proprietors:
• **TOYO INK SC HOLDINGS CO., LTD.**
  **Chuo-ku**
  **Tokyo 104-0031 (JP)**
• **Toyo-Morton, Ltd.**
  **Chuo-ku**
  **Tokyo 1040031 (JP)**
• **Toyochem Co., Ltd.**
  **Chuo-ku**
  **Tokyo 1048379 (JP)**

(72) Inventors:
• **USA, Yuki**
  **Tokyo 1040031 (JP)**
• **UCHIYAMA, Yusei**
  **Tokyo 1040031 (JP)**

(74) Representative: **Pfenning, Meinig & Partner mbB
Patent- und Rechtsanwälte
Theresienhöhe 11a
80339 München (DE)**

(56) References cited:
WO-A1-2014/115521          JP-A- H03 170 580
JP-A- 2014 159 548          JP-A- 2014 502 644
JP-A- 2015 067 663          US-A1- 2009 044 907

**Description**

Technical Field

The present invention relates to adhesive compositions and laminates using the adhesive compositions and relates more specifically to an adhesive composition suitable for forming a laminate that is useful for bonding sheets of a packaging material for food, medical products, cosmetics, and so on and also to a laminate using such an adhesive composition.

Background Art

Conventionally, a dry lamination method that uses a hydroxyl group/isocyanate-based solvent adhesive is being employed to bond various plastic films together, to bond a plastic film and a metallized film, or to bond a plastic film and a metal foil. For example, Patent Literature 1 discloses an adhesive composition that contains (A) a hydroxyl group-containing thermoplastic polyester urethane resin, (B) a solvent, (C) an amine-modified urethane resin, and (D) a polyisocyanate compound. However, an adhesive that contains an organic solvent is used in the dry lamination method, and thus specialized facilities for suppressing and preventing fires are necessary.

In recent years, a demand for simple facilities has led to an increasing demand for an adhesive that is free of organic solvents, and studies on a shift to solventless adhesives are being actively carried out.

For example, Patent Literature 2 discloses a solventless adhesive composition for lamination that contains a polyol component (1) and a polyisocyanate component (2) composed of two types of polyisocyanate compounds.

In addition, Patent Literature 3 discloses a solventless lamination adhesive composition that contains a polyol component (1) and a polyisocyanate component (2) essentially containing a trifunctional polyisocyanate compound, that has a branching point concentration within a specific range, and in which the ratio of the number of moles of a hydroxyl group to the number of moles of an isocyanate group is 1:1 to 1:3.

Patent Literature 4 discloses a solventless adhesive composition that contains a polyol component (A) and an isocyanate component (B) essentially containing isophorone diisocyanate.

Patent Literature 5 discloses a solventless adhesive composition that contains a polyol component (A), a polyisocyanate compound (B), and powders (C) having a specific particle size.

Furthermore, Patent Literature 6 discloses an adhesive composition that contains a polyisocyanate component (a) and a polyol component (b), in which the polyisocyanate component (a) contains a monomeric 4,4'-methylenediphenyl diisocyanate (i) and an isocyanate functional prepolymer (ii).

In addition, Patent Literature 7 discloses an adhesive composition that contains a polyisocyanate component (A) and a polyol component (B), in which the polyisocyanate component (A) is a reaction product obtained by allowing 2,4'-diphenylmethane diisocyanate (a1), 4,4'-MDI (a2), and a polyol essentially containing a polyether polyol (a3) to react under the condition of excess isocyanate groups, and the polyol component (B) essentially contains a polyester diol (b1) having a number-average molecular weight of no less than 500 nor more than 3000 and further contains at least one of a diol (b2) having a number-average molecular weight of no less than 50 and less than 500 and a triol (b3).

In addition, Patent Literature 8 discloses a two-component polyurethane adhesive that contains a resin component A containing a monomeric polyisocyanate and a prepolymer and a curative B containing a polyether polyol having a molecular weight of 3000 to 20,000 and another polyol having four to eight hydroxyl groups and a molecular weight of 200 to 1000.

Citation List

Patent Literature

Patent Literature 1: Japanese Unexamined Patent Application Publication No. 2009-073949
Patent Literature 2: Japanese Unexamined Patent Application Publication No. H8-60131
Patent Literature 3: Japanese Unexamined Patent Application Publication No. 2003-96428
Patent Literature 4: Japanese Unexamined Patent Application Publication No. 2006-57089
Patent Literature 5: Japanese Unexamined Patent Application Publication No. 2011-162579
Patent Literature 6: Japanese Unexamined Patent Application Publication No. 2012-131980
Patent Literature 7: Japanese Unexamined Patent Application Publication No. 2014-159548
Patent Literature 8: Published Japanese Translation of PCT International Publication for Patent Application, No. 2014-502644

## Summary of Invention

### Technical Problem

In a typical method of obtaining a laminate by using an adhesive composition, a substrate to be bonded is coated with an adhesive composition, a formed adhesive layer is then overlaid with another substrate to be bonded, and, in that state, curing of the adhesive layer interposed between the two substrates is allowed to proceed. This process of "allowing curing of an adhesive layer to proceed" is referred to as an aging process.

In the inventions described in Patent Literatures 2 to 5, as a polyisocyanate component, specifically an alicyclic polyisocyanate component or an aliphatic polyisocyanate component is essential. An alicyclic polyisocyanate component or an aliphatic polyisocyanate component reacts relatively mildly, and thus the aging process takes 2 to 5 days at 40°C to 50°C.

Therefore, there is a demand that an adhesive composition be provided that can exhibit a bonding performance equivalent or superior to that of a conventional adhesive composition with a shorter-duration aging.

As compared to an alicyclic polyisocyanate component or an aliphatic polyisocyanate component, an aromatic polyisocyanate component is highly reactive and is thus suitable for addressing the problem of reducing the aging duration. However, because of the high reactivity, a reaction with a polyol component competes with a reaction with water in environmental moisture. Thus, it is necessary to strictly control the environmental humidity during coating, overlaying, and aging to a low humidity in order to achieve a sufficient bonding strength.

Therefore, there is a demand that an adhesive composition be provided that can exhibit a bonding performance equivalent or superior to that of a conventional adhesive composition with a shorter-duration aging even when the environmental humidity is not strictly controlled to a low humidity.

As compared to a solvent-type adhesive, a solventless adhesive, being solvent-free, makes it difficult to ensure a favorable coating performance, and thus a coating surface is more likely to become rough. When an isocyanate component and a polyol component react with each other and the adhesive is cured, $CO_2$ is produced. When a film substrate having a high gas barrier property is used, $CO_2$ is less likely to be released to the outside due to the high gas barrier property, and thus the coating surface, that is, the lamination interface becomes even rougher. In particular, high-speed coating leads to a more roughened coating surface, and this roughness becomes more prominent when a film substrate having a high gas barrier property is used.

The invention described in Patent Literature 6 discloses that the adhesive composition contains (i) monomeric 4,4'-methylenediphenyl diisocyanate and (ii) an isocyanate functional prepolymer as (a) the polyisocyanate component. However, the adhesive composition described in Patent Literature 6 suffers from a problem in that the viscosity increases extremely in a short period of time after the polyol component and the polyisocyanate component are mixed, or in other words, the adhesive composition described in Patent Literature 6 suffers from a problem of a short pot life. In particular, in the case of a solventless adhesive, an increase in the viscosity in a short period of time not only has a large influence on the productivity but also degrades the coating performance, and thus roughening of a coating surface cannot be overlooked. In particular, roughening of a coating surface is considerable when the adhesive described in Patent Literature 6 is used on a film substrate having a high gas barrier property.

The invention described in Patent Literature 7 discloses an adhesive having a favorable bonding performance and a favorable pot life even in an increased humidity as the reactivity with water is controlled. However, when coating and bonding are performed at a low temperature of 60°C or lower and at a high rate of 200 m/min or higher, a new problem arises in that the appearance of a laminate in which a film substrate having a high gas barrier property is used deteriorates.

The invention described in Patent Literature 8 is directed to quick curing at a high temperature of at least 65°C (refer to the eighth paragraph). However, Patent Literature 8 is silent as to the coating rate at a low temperature of 60°C or lower. The adhesive described in Patent Literature 8 is directed to bonding fiber-reinforced plastics (FRP) together. Typically, FRP is neither colorless nor transparent or is not very smooth, and thus the apparent "roughening" of a coating surface (bonding interface) of the adhesive does not pose a serious problem. On the other hand, in a packaging material in which various sheet-like substrates are laminated, the bonding strength is required, and the "appearance" is equally given an importance. Therefore, achieving both an improvement in the coating rate at a low temperature and a favorable appearance is a very importance issue in the field of packaging materials.

The present invention is directed to providing an adhesive composition that can exhibit a bonding performance equivalent or superior to that of a conventional adhesive composition with a shorter-duration aging even when the environmental humidity is not strictly controlled to a low humidity and that can form a laminate having a favorable appearance when a film substrate having a high gas barrier property is coated with the adhesive composition at a low temperature of 60°C or lower and at a high rate of 200 m/min or higher and the film substrate is bonded. Solution to Problem

The present invention relates to an adhesive composition that contains a polyisocyanate component (A) and a polyol component (B), in which the polyisocyanate component (A) satisfies all of the following (i) to (iv).

(i) The polyisocyanate component (A) contains the following component (A1) and the following crude MDI (A2).

(ii) The component (A1) is consisting essentially of a urethane prepolymer obtained by allowing a polyol consisting essentially of a polyether polyol (a1) and an isocyanate component (a2) to react under the condition of excess isocyanate groups with respect to a hydroxyl group in a polyol and may contain an unreacted isocyanate component (a2).

(iii) The isocyanate component (a2) is consisting essentially of

- 4,4'-diphenylmethane diisocyanate, or
- 4,4'-diphenylmethane diisocyanate and at least one type of isocyanate selected from the group consisting of 2,4'-diphenylmethane diisocyanate and tolylene diisocyanate.

(iv) The crude MDI (A2) contains at least one type of MDI monomer selected from the group consisting of 4,4'-diphenylmethane diisocyanate, 2,4'-diphenylmethane diisocyanate, and 2,2'-diphenylmethane diisocyanate and polymethylene polyphenylene isocyanate, and the isocyanate group content by percentage is less than 33 mass%.
In addition, the polyol component (B) is a polyol composition that is consisting essentially of a polyester diol (b1) having a number-average molecular weight of no less than 500 nor more than 3,000 and at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

In the adhesive composition of the present invention, when the number of moles of the hydroxyl group in the polyol component (B) is 100 moles, the number of moles of the isocyanate group in the polyisocyanate component (A) is preferably no less than 120 moles nor more than 300 moles and is more preferably no less than 150 moles nor more than 250 moles.

In addition, in the adhesive composition of the present invention, it is preferable that the total amount of 4,4'-diphenylmethane diisocyanate, 2,4'-diphenylmethane diisocyanate, 2,2'-diphenylmethane diisocyanate, and tolylene diisocyanate contained in the total of 100 mass% of the polyisocyanate component (A) and the polyol component (B) be 4 to 15 mass%.

In the adhesive composition of the present invention, it is preferable that the isocyanate group content by percentage in the polyisocyanate component (A) be no less than 10 mass% and less than 30 mass%.

In the adhesive composition of the present invention, it is preferable that the total amount of 4,4'-diphenylmethane diisocyanate, 2,4'-diphenylmethane diisocyanate, 2,2'-diphenylmethane diisocyanate, and tolylene diisocyanate contained in 100 mass% of the polyisocyanate component (A) be 10 to 55 mass%.

In the adhesive composition of the present invention, it is preferable that the isocyanate group content by percentage in the component (A1) be no less than 10 mass% and less than 18 mass%.

In addition, in the adhesive composition of the present invention, it is preferable that the total of unreacted 4,4'-diphenylmethane diisocyanate, unreacted 2,4'-diphenylmethane diisocyanate, and unreacted tolylene diisocyanate contained in 100 mass% of the component (A1) be 10 to 55 mass%.

In the adhesive composition of the present invention, it is preferable that, of the total of 100 mol% of 4,4'-diphenylmethane diisocyanate, 2,4'-diphenylmethane diisocyanate, and tolylene diisocyanate, the proportion of each of 4,4'-diphenylmethane diisocyanate, 2,4'-diphenylmethane diisocyanate, and tolylene diisocyanate that are used to obtain the component (A1) be as follows:

4,4'-MDI is no less than 40 mol% nor more than 100 mol%;
2,4'-diphenylmethane diisocyanate is no less than 0 mol% and less than 60 mol%; and
tolylene diisocyanate is no less than 0 mol% and less than 60 mol%.

In the adhesive composition of the present invention, it is preferable that the isocyanate group content by percentage in the crude MDI (A2) be no less than 25 mass% and less than 33 mass%, and it is preferable that polymethylene polyphenylene isocyanate contained in 100 mass% of the crude MDI (A2) be 50 to 70 mass%.

In the adhesive composition of the present invention, the polyol component (B) is a polyol composition that consists essentially of a polyester diol (b1) having a number-average molecular weight of no less than 500 nor more than 3,000 and
at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

In addition, it is preferable that the adhesive composition of the present invention contain, in 100 mass% of the polyol component (B),

no less than 60 mass% nor more than 99 mass% of the polyester diol (b1) and
no less than 1 mass% nor more than 40 mass% of the diol (b2), the triol (b3), and the polyether diol (b4) in combination.

It is preferable that the adhesive composition of the present invention further contain particles (C) having a mean particle size of no less than $1 \times 10^{-4}$ mm nor more than $4 \times 10^{-4}$ mm.

In addition, it is preferable that the adhesive composition of the present invention contain 0.01 to 10 parts by mass of the particles (C) having a mean particle size of no less than $1 \times 10^{-4}$ mm nor more than $4 \times 10^{-4}$ mm with respect to the total of 100 parts by mass of the polyisocyanate component (A) and the polyol component (B).

Furthermore, it is preferable that the adhesive composition of the present invention be solventless.

Furthermore, it is preferable that the adhesive composition of the present invention be a lamination adhesive for forming a packaging material.

The present invention further relates to a laminate formed by laminating at least two sheet-like substrates by using the adhesive composition of the present invention.

In addition, the present invention further relates to a method of producing a laminate by coating a first sheet-like substrate with the adhesive composition of the present invention to form an adhesive layer, overlaying the adhesive layer with a second sheet-like substrate, and curing the adhesive layer interposed between the two sheet-like substrates.

In addition, the present invention relates to a method of producing an adhesive composition by combining a polyisocyanate component (A) and a polyol component (B), in which
the polyisocyanate component (A) satisfies all of the following (i) to (iv).

(i) The polyisocyanate component (A) is obtained by mixing the following component (A1) and a crude MDI (A2).
(ii) The component (A1) is obtained by allowing a polyol consisting essentially of a polyether polyol (a1) and an isocyanate component (a2) to react under the condition of excess isocyanate groups with respect to a hydroxyl group in a polyol, is consisting essentially of contains a urethane prepolymer, and may contain an unreacted isocyanate component (a2).
(iii) The isocyanate component (a2) is consisting essentially of

- 4,4'-diphenylmethane diisocyanate, or
- 4,4'-diphenylmethane diisocyanate and at least one type of isocyanate selected from the group consisting of 2,4'-diphenylmethane diisocyanate and tolylene diisocyanate.

(iv) The crude MDI (A2) contains at least one type of MDI monomer selected from the group consisting of 4,4'-diphenylmethane diisocyanate, 2,4'-diphenylmethane diisocyanate, and 2,2'-diphenylmethane diisocyanate and polymethylene polyphenylene isocyanate, and the isocyanate group content by percentage is less than 33 mass%.

The polyol component (B) is a polyol composition that is consisting essentially of a polyester diol (b1) having a number-average molecular weight of no less than 500 nor more than 3,000 and
at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

Furthermore, in the method of producing an adhesive composition of the present invention, it is preferable that the polyol component (B) be combined with the polyisocyanate component (A) obtained by mixing the crude MDI (A2) with the component (A1) in which the total of unreacted 4,4'-diphenylmethane diisocyanate, unreacted 2,4'-diphenylmethane diisocyanate, and unreacted tolylene diisocyanate contained in 100 mass% of the component (A1) is 10 to 55 mass%.

Advantageous Effects of Invention

According to the adhesive composition of the present invention, an excellent advantageous effect is obtained in which a bonding performance equivalent or superior to that of a conventional adhesive composition can be exhibited with a shorter-duration aging even in an increased humidity. In addition, a laminate having a favorable appearance can be formed when a film substrate having a high gas barrier property is coated with the adhesive composition at a low temperature of 60°C or lower and at a high rate of 200 m/min or higher and the film substrate is bonded.

Description of Embodiments

Hereinafter, embodiments of the present invention will be described in detail. It is to be noted that, in the present specification, the expression "a given number A to another given number B" means a range of numbers including the number A and numbers greater than the number A and the number B and numbers smaller than the number B. An adhesive composition of the present invention contains a polyisocyanate component (A) and a polyol component (B). Hereinafter, each of the components will be described in detail.

<<Polyisocyanate Component (A)>>

Hereinafter, in some cases, 4,4'-diphenylmethane diisocyanate is abbreviated to 4,4'-MDI, 2,4'-diphenylmethane diisocyanate is abbreviated to 2,4'-MDI, 2,2'-diphenylmethane diisocyanate is abbreviated to 2,2'-MDI, and tolylene diisocyanate is abbreviated to TDI.

In addition, 4,4'-MDI, 2,4'-MDI, and 2,2'-MDI are collectively abbreviated to MDI in some cases.

The polyisocyanate component (A) satisfies all of the following (i) to (iv).

(i) The polyisocyanate component (A) contains the following component (A1) and a crude MDI (A2).

(ii) The component (A1) is consisting essentially of a urethane prepolymer obtained by allowing a polyol consisting essentially of a polyether polyol (a1) and an isocyanate component (a2) to react under the condition of excess isocyanate groups with respect to a hydroxyl group in a polyol and may contain an unreacted isocyanate component (a2).

(iii) The isocyanate component (a2) is consisting essentially of

- 4,4'-MDI or
- 4,4'-MDI and at least one type of isocyanate selected from the group consisting of 2,4'-MDI and TDI.

(iv) The crude MDI (A2) contains at least one type of MDI monomer selected from the group consisting of 4,4'-MDI, 2,4'-MDI, and 2,2'-MDI and polymethylene polyphenylene isocyanate, and the isocyanate group content by percentage is less than 33 mass%.

<Component (A1)>

The component (A1) is obtained, for example, by allowing 4,4'-MDI and a polyol to react under the condition of excess isocyanate groups with respect to a hydroxyl group in the polyol.

Alternatively, the component (A1) is obtained by obtaining a mixture that essentially contains 4,4'-MDI and in which either 2,4'-MDI or TDI is mixed with the 4,4'-MDI and by allowing the mixture and a polyol to react under the aforementioned condition.

Alternatively, the component (A1) is obtained by allowing a mixture composed of 4,4'-MDI, 2,4'-MDI, and TDI and a polyol to react under the aforementioned condition.

Alternatively, the component (A1) is obtained by mixing a component obtained by allowing 4,4'-MDI and a polyol to react under the aforementioned condition with a component obtained by allowing at least one type of isocyanate selected from the group consisting of 2,4'-MDI and TDI and a polyol to react under the aforementioned condition.

Furthermore, the component (A1) is obtained by adding, in a desired order, 4,4'-MDI and at least one type of isocyanate selected from the group consisting of 2,4'-MDI and TDI to a polyol and allowing them to react under the aforementioned condition.

In other words, the component (A1) essentially contains a urethane prepolymer resulting from a reaction of 4,4'-MDI and a polyol and may further contain a urethane prepolymer resulting from a reaction of 2,4'-MDI and a polyol, a urethane prepolymer resulting from a reaction of TDI and a polyol, a urethane prepolymer resulting from a reaction of 4,4'-MDI, 2,4'-MDI, and a polyol, a urethane prepolymer resulting from a reaction of 4,4'-MDI, TDI, and a polyol, a urethane prepolymer resulting from a reaction of 4,4'-MDI, 2,4'-MDI, TDI, and a polyol, and a urethane prepolymer resulting from a reaction of TDI, 2,4'-MDI, and a polyol, as well as unreacted 4,4'-MDI, unreacted 2,4'-MDI, and unreacted TDI.

It is preferable that, in the total of 100 mol% of 4,4'-MDI, 2,4'-MDI, and TDI, the proportion of each of 4,4'-MDI, 2,4'-MDI, and TDI to be used to obtain the component (A1) be as follows: 4,4'-MDI is no less than 40 mol% nor more than 100 mol%; 2,4'-MDI is no less than 0 mol% and less than 60 mol%; and TDI is no less than 0 mol% and less than 60 mol%. With the stated ranges, a laminate having a more favorable appearance can be formed when a film substrate having a high gas barrier property is used.

The polyol that forms the reaction product (A1) will be described.

The polyol essentially contains a polyether polyol (a1) and can contain a polyester polyol and a low molecular weight diol other than the above. The polyether polyol (a1) typically has a low viscosity in a molten state as compared to a polyester polyol, and thus it is important to use the polyether polyol (a1) as a polyol when the component (A1) free of solvent is obtained. When a polyester polyol is further used in combination as a polyol, the compatibility with a polyol component (B), which will be described later, can be increased, and the cohesive strength of the adhesive composition can be increased.

The method of producing the polyether polyol (a1) is not particularly limited, but the polyether polyol (a1) is obtained, for example, by polymerizing an oxirane compound, such as ethylene oxide, propylene oxide, butylene oxide, or tetrahydrofuran, with, for example, water or a low molecular weight polyol, such as ethylene glycol, propylene glycol, trimethylolpropane, or glycerin, serving as an initiator.

The number of the functional groups of the polyether polyol (a1) is not limited, and aside from a difunctional one, a trifunctional one or higher can be used. In addition, those with different numbers of functional groups may be used in combination. In addition, it is preferable that the number-average molecular weight of the polyether polyol (a1) be in a range of no less than 100 nor more than 5000. In addition, those having different number-average molecular weights may be used in combination.

Examples of the polyester polyol include a polyester polyol obtained by allowing a polycarboxylic acid component and a glycol component to react.

Examples of the polycarboxylic acid component include polycarboxylic acid, such as terephthalic acid, isophthalic acid, adipic acid, azelaic acid, or sebacic acid, or a dialkyl ester thereof, or a mixture thereof. Examples of the glycol component include glycols, such as ethylene glycol, propylene glycol, diethylene glycol, butylene glycol, neopentyl glycol, 1,6-hexanediol, 3-methyl-1,5-pentanediol, 3,3'-dimethylolheptane, polyoxyethylene glycol, polyoxypropylene glycol, and polytetramethylene ether glycol, or a mixture thereof.

Examples of the low molecular weight diol include low molecular weight diols, such as ethylene glycol, propylene glycol, diethylene glycol, butylene glycol, neopentyl glycol, 1,6-hexanediol, 3-methyl-1,5-pentanediol, 3,3'-dimethylolheptane, and 2-methyl-1,3-propane diol, or a mixture thereof.

It is preferable that the isocyanate group content by percentage in the component (A1) be no less than 10 mass% and less than 18 mass%. With the stated range, a laminate having a more favorable appearance can be formed when a film substrate having a high gas barrier property is used.

It is preferable that the total of unreacted 4,4'-MDI, unreacted 2,4'-MDI, and unreacted TDI contained in 100 mass% of the component (A1) be in a range of 10 to 55 mass%. With the stated range, a laminate having a more favorable appearance can be formed even when a film substrate having a high gas barrier property is used. In addition, a laminate that excels in the bonding strength can be formed even with a one-day aging.

<Crude MDI (A2)>

The crude MDI (A2) contains at least one type of MDI monomer selected from the group consisting of 4,4'-MDI, 2,4'-MDI, and 2,2'-MDI and polymethylene polyphenylene isocyanate. In the present invention, it is important to use a crude MDI (A2) having an isocyanate group content by percentage of less than 33 mass%, and it is preferable that the stated content by percentage be no less than 25 mass%. When the isocyanate group content by percentage is within the stated range, a laminate having a more favorable appearance can be formed even when a film substrate having a high gas barrier property is used.

The isocyanate group content by percentage in the crude MDI (A2) is obtained as follows.
[isocyanate (hereinafter, also referred to as NCO) (mass%)]

In a 200-mL Erlenmeyer flask, approximately 1 gram of a base is precisely weighted, 10 mL of 0.5 N di-n-butylamine (toluene solution), 10 mL of toluene, and an appropriate amount of bromphenol blue are added to the base, and then an approximately 100 mL of methanol is added and dissolved. This mixed solution is titrated with a 0.25 N hydrochloric acid solution. NCO (mass%) is obtained through the following formula.

$$\text{NCO (mass\%)} = (\text{blank titration value} - 0.5 \text{ N hydrochloric acid solution titration value})$$
$$\times 4.202 \times 0.25 \text{ N hydrochloric acid solution factor} \times 0.25 \div \text{sample mass}$$

Commercially available crude MDI (A2) can be obtained from Yantai Wanhua Polyurethanes Co., Ltd., BASF INOAC Polyurethanes Ltd., or the like, and examples of such commercially available crude MDI (A2) include Wannate PM-200 manufactured by Yantai Wanhua Polyurethanes Co., Ltd. and Lupranate manufactured by BASF INOAC Polyurethanes Ltd.

It is preferable that polymethylene polyphenylene isocyanate contained in 100 mass% of the crude MDI (A2) be 50 to 70 mass%. When the content by percentage of polymethylene polyphenylene isocyanate is within the stated range, a laminate having a more favorable appearance can be obtained when a film substrate having a high gas barrier property is used and coating at high speed and bonding are performed.

It is preferable that 100 mass% of the polyisocyanate component (A) contain a total of 10 to 55 mass% of 4,4'-MDI, 2,4'-MDI, 2,2'-MDI, and TDI derived from the component (A1) and derived from the crude MDI (A2). With the stated range, a laminate having a more favorable appearance can be formed even when a film substrate having a high gas barrier property is used. Within a range that does not hinder the object of the present invention, aside from the polyisocyanate component (A) described above, another polyisocyanate component may be used.

<<Polyol Component (B)>>

The polyol component (B) is a polyol composition that is consisting essentially of a polyester diol (b1) and at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

As the polyester diol (b1) is contained essentially, a sufficient bonding strength can be obtained. As the polyol component (B) further contains at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000, the bonding strength in a high-humidity condition improves.

<Polyester Diol (b1) Having Number-Average Molecular Weight of No Less Than 500 Nor More Than 3,000>

Examples of the polyester diol (b1) include a polyester polyol obtained by allowing polycarboxylic acid, such as terephthalic acid, isophthalic acid, adipic acid, azelaic acid, or sebacic acid, or a dialkyl ester thereof, or a mixture thereof to react, for example, with glycols, such as ethylene glycol, propylene glycol, diethylene glycol, butylene glycol, neopentyl glycol, 1,6-hexanediol, 3-methyl-1,5-pentanediol, 3,3'-dimethylolheptane, polyoxyethylene glycol, polyoxypropylene glycol, and polytetramethylene ether glycol, or a mixture thereof. In addition, the examples include a polyester diol obtained by subjecting lactones, such as polycaprolactone, polyvalerolactone, and poly($\beta$-methyl-$\gamma$-valerolactone), to ring-opening polymerization.

One obtained by allowing acid anhydride, such as trimellitic anhydride, to react in a part of the hydroxyl group in the obtained polyester diol can also be used as the polyester diol (b1). The use of the polyester diol to which acid anhydride is added can improve the tight bonding performance even when the adhesive composition is applied to a sheet-like substrate that is difficult to be tightly bonded. It is preferable that the amount of acid anhydride, such as trimellitic anhydride, to be added be 0.1 to 5 mass% in 100 mass% of the reacted polyester diol.

When the number-average molecular weight of the polyester diol (b1) is no less than 500 nor more than 3,000, the compatibility with the polyisocyanate component (A) that contains polyether polyurethane as an essential constituent component improves. As a result, a transparent adhesive composition can be obtained, and a sufficient bonding performance can be exhibited.

<Diol (b2) Having Number-Average Molecular Weight of No Less Than 50 and Less Than 400>

Examples of the diol (b2) include low molecular weight diols that satisfy the stated number-average molecular weight, such as polyester diol, polyether diol, polyether ester diol, polyester amide diol, acryl diol, polycarbonate diol, ethylene glycol, propylene glycol, diethylene glycol, butylene glycol, neopentyl glycol, 1,6-hexanediol, 3-methyl-1,5-pentanediol, 3,3'-dimethylolheptane, and 2-methyl-1,3-propane diol, or a mixture thereof. Among the above, the low molecular weight diols are preferable from the viewpoint of reactivity.

As a raw material for the polyester diol in the diol (b2), those similar to the case of the (b1) can be illustrated.

Suitable examples of the polyether diol include a compound obtained by polymerizing an oxirane compound, such as ethylene oxide, propylene oxide, butylene oxide, or tetrahydrofuran with, for example, water or a difunctional low molecular weight polyol, such as ethylene glycol, or propylene glycol, serving as an initiator.

Suitable examples of the polyether ester diol include a compound obtained by allowing dibasic acid, such as terephthalic acid, isophthalic acid, adipic acid, azelaic acid, or sebacic acid, or a dialkyl ester thereof, or a mixture thereof to react with the stated polyether diol.

The polyester amide diol is obtained by additionally using, for example, aliphatic diamine having an amino group, such as ethylenediamine, propylenediamine, or hexamethylenediamine, as a raw material in the esterification reaction described above.

An example of the acrylic diol can be obtained by copolymerizing hydroxyethyl acrylate, hydroxypropyl acrylate, acrylic hydroxybutyl, or their corresponding methacrylic acid derivatives, in each of which at least one hydroxyl group is contained in one molecule, with, for example, acrylic acid, methacrylic acid, or an ester thereof,

Examples of the polycarbonate diol include one obtained by allowing one type or two or more types of glycols selected from ethylene glycol, propylene glycol, 1,4-butanediol, 1,5-pentanediol, 1,6-hexanediol, 3-methyl-1,5-pentanediol, 1,9-nonanediol, 1,8-nonanediol, neopentyl glycol, diethylene glycol, dipropylene glycol, 1,4-cyclohexanediol, and 1,4-cyclohexanedimethanol to react with dimethyl carbonate, diphenyl carbonate, ethylene carbonate, or phosgene.

<Triol (b3) Having Number-Average Molecular Weight of No Less Than 50 and Less Than 500>

Suitable examples of the triol (b3) include low molecular weight triols, such as a polyether triol, castor oil, trimethylolpropane, or glycerin, or a mixture thereof. Among the above, the low molecular weight triols or a polyether triol is preferable from the viewpoint of reactivity.

The polyether triol is obtained, for example, by polymerizing an oxirane compound, such as ethylene oxide, propylene oxide, butylene oxide, or tetrahydrofuran, with a low molecular weight triol, such as trimethylolpropane or glycerin, serving as an initiator.

<Polyether Diol (b4) Having Number-Average Molecular Weight of No Less Than 400 and Less Than 1000>

Suitable examples of the polyether diol (b4) include a compound obtained, for example, by polymerizing an oxirane compound, such as ethylene oxide, propylene oxide, butylene oxide, or tetrahydrofuran, with, for example, water or a low molecular weight polyol, such as ethylene glycol, propylene glycol, trimethylolpropane, or glycerin, serving as an initiator.

It is preferable that the polyol component (B) contain, in 100 mass% of the polyol component (B), no less than 60 mass% nor more than 99 mass% of the polyester diol (b1) and no less than 1 mass% nor more than 40 mass% of a combination of a diol (b2), a triol (b3), and a polyether diol (b4). With the stated ranges, when a film substrate having a high gas barrier property is used and coating at speed and bonding are performed, a laminate having a more favorable appearance can be obtained.

The polyol component (B) may contain, aside from the polyester diol (b1), the diol (b2), the triol (b3), and the polyether diol (b4), another polyol component within a range that does not hinder the object of the present invention.

<<Other Components, Contents, and So On of Adhesive Composition>>

In the adhesive composition of the present invention, it is preferable that, when the number of moles of the hydroxyl group in the polyol component (B) is 100 moles, the number of moles of the isocyanate group in the polyisocyanate component (A) be no less than 120 moles nor more than 300 moles. With the stated range, a favorable bonding strength can be exhibited even when the aging is performed in a high-humidity condition.

In the adhesive composition of the present invention, it is preferable that the total amount of 4,4'-MDI, 2,4'-MDI, 2,2'-MDI, and TDI contained in the total of 100 mass% of the polyisocyanate component (A) and the polyol component (B) be 4 to 15 mass%. With the stated range, a laminate having a more preferable appearance can be obtained when a film substrate having a high gas barrier property is used.

It is preferable that the adhesive composition of the present invention further contain particles (C) having a mean particle size of no less than $1 \times 10^{-4}$ mm nor more than $4 \times 10^{-4}$ mm. As the particles having a mean particle size within the stated range are contained, a laminate having a more appearance can be obtained when a film substrate having a high gas barrier property is used and coating at high speed and bonding are performed. When the particles are too small, the flowage characteristics do not change very much even when the particles are added, and thus the appearance does not change very much, either. Herein, the mean particle size is the mean volume size and is a value obtained through a laser light scattering method.

Such particles may be either of an inorganic compound and an organic compound, and one kind alone or two or more kinds in combination may be used.

Examples of the particles of an inorganic compound include powder of aluminum oxide, aluminum silicate, aluminum hydroxide, alumina white, potassium sulfate, zinc oxide, zinc carbonate, magnesium aluminometasilicate, magnesium silicate, magnesium oxide, magnesium carbonate, magnesium hydroxide, barium titanate, barium sulfate, barium carbonate, calcium carbonate, calcium hydroxide, calcium oxide, calcium silicate, calcium sulfite, calcium sulfate, titanium oxide, silica, zeolite, activated carbon, kaolin, talc, waxy clay, silica stone, mica, graphite, sericite, montmorillonite, sepiolite, bentonite, perlite, wollastonite, fluorite, dolomite. Among the above, silica or talc is used favorably.

Examples of the particles of an organic compound include powder of a benzoguanamine resin, a silicon-based resin, a styrene resin, cross-linked polyester, an epoxy resin, a phenolic resin, a fluoroplastic, a polyethylene resin, a polyester resin, a polyimide resin, a polyamide resin, a polyacetal resin, a polyurethane resin, a vinyl acetate copolymer-based resin, a polyphenylene oxide resin, nylon 6, nylon 12, cellulose, an acrylic resin, a methacrylic resin. Among the above, a benzoguanamine resin is used favorably.

It is preferable that the content of the particles (C) be 0.01 to 10 parts by mass with respect to the total of 100 parts by mass of the polyisocyanate component (A) and the polyol component (B). With this range, the appearance and the bonding strength can both be improved in a well-balanced manner.

The particles (C) can be mixed simultaneously with the polyisocyanate component (A) and the polyol component (B), or the particles (C) can first be mixed with one of the components and this mixture can be mixed with the other component. It is preferable that the particles (C) be mixed with the polyol component (B) in advance,

It is preferable that the adhesive composition of the present invention do not contain a solvent and that the components be combined at as low temperature as possible within a range in which the flowability can be ensured. Specifically, it is preferable that the components be combined at no lower than 25°C nor higher than 80°C. The viscosity at 60°C immediately after the polyisocyanate component (A) and the polyol component (B) are mixed is preferably no less than 50 mPa·s nor more than 5000 mPa·s and more preferably no less than 50 mPa·s nor more than 3000 mPa·s.

In the present invention, the expression "immediately after mixing" means within one minute of mixing to uniformity, and the melt viscosity is indicated by a value obtained by a type B viscometer. When the melt viscosity at 60°C exceeds 5,000 mPa·s, coating becomes difficult, and it becomes difficult to ensure favorable operability. When the coating temperature is no higher than 60°C, a favorable coating appearance may not be obtained.

Meanwhile, when the melt viscosity at 60°C is less than 50 mPa·s, a sufficient bonding performance may be not be obtained due to a low initial cohesive strength, the appearance may be degraded because the thickness of the coated film fails to be uniform when a substrate is coated with the adhesive, or a warp may be produced.

In the adhesive composition of the present invention, an additive, such as an antioxidant, an ultraviolet absorber, a hydrolysis preventing agent, an antifungal agent, a thickener, a plasticizer, an antifoaming agent, a pigment, or a filler, can further be used as necessary.

In addition, in order to further improve the bonding performance, a bonding assistant, such as a silane coupling agent, phosphoric acid, a phosphoric acid derivative, acid anhydride, or an adhesive resin, can be used. In addition, a well-known catalyst or additive can be used to regulate the curing reaction.

As the aforementioned silane coupling agent, one that includes a functional group such as a vinyl group, an epoxy group, an amino group, an imino group, or a mercapto group and a functional group such as a methoxy group or an ethoxy group can be used. Examples include chlorosilane, such as vinyltrichlorosilane; aminosilane, such as N-(dimethoxymethylsilylpropyl)ethylcnediamine or N-(trictoxysilylpropyl)ethylenediamine; epoxysilane, such as γ-glycidoxypropyltrimethoxysilane or γ-glycidoxypropyltriethoxysilane; and vinylsilane, such as vinyltriethoxysilane. It is preferable that the amount of a silane coupling agent to be added be 0.1 to 5 mass% with respect to the entire adhesive composition.

With regard to phosphoric acid or a derivative thereof to be used in the present invention, any phosphoric acid having at least one or more free oxyacids may be used, and examples of such include phosphoric acids, such as hypophosphorous acid, phosphorous acid, orthophosphoric acid, and hypophosphoric acid; and condensed phosphoric acids, such as metaphosphoric acid, pyrophosphoric acid, tripolyphosphoric acid, polyphosphoric acid, and ultraphosphoric acid. In addition, examples of a derivative of phosphoric acid include one in which the above phosphoric acid has undergone partial esterification with alcohols in a state in which at least one or more free oxyacids are retained. Examples of the alcohols include an aliphatic alcohol, such as methanol, ethanol, ethylene glycol, or glycerin; and an aromatic alcohol, such as phenol, xylenol, hydroquinone, catechol, or phloroglucinol. One type or two or more types of phosphoric acids or derivatives thereof may be used. The amount of phosphoric acid or a derivative thereof to be added is 0.01 to 10 mass%, preferably 0.05 to 5 mass%, or more preferably 0.1 to 1 mass% with respect to the entire adhesive composition.

<<Method of Producing Adhesive Composition>>

Hereinafter, an example of a method of producing an adhesive composition of the present invention will be described, but the present invention is not limited to the following method.

First, the adhesive composition of the present invention is formulated. Specifically, at least a polyisocyanate component (A) and a polyol component (B) are mixed to obtain an adhesive composition. It is preferable that the total of unreacted 4,4'-MDI, unreacted 2,4'-MDI, and unreacted TDI contained in 100 mass% of the component (A1) be 10 to 55 mass%.

The method of coating the adhesive composition is not limited, and a method that employs a solventless laminator can be illustrated as a suitable example. The substrate may be selected in accordance with the intended use.

For example, a surface of a sheet-like substrate is coated with the adhesive composition. The coating amount of the adhesive composition is selected as appropriate in accordance with the type of the substrate, the coating condition, and so on and is typically no less than 1.0 g/m² nor more than 5.0 g/m² or preferably no less than 1.5 g/m² nor more than 4.5 g/m².

Thereafter, a bonding surface of the sheet-like substrate is bonded to another sheet-like substrate, which is aged at a room temperature or while being heated to be cured. In the case of the adhesive composition of the present invention, the time it takes for aging is approximately one day. Through the above processes, a laminate is obtained.

A sheet-like substrate to be used is a plastic film of polyester, polyamide, polyethylene, polypropylene, an ethylene-vinyl alcohol copolymer, an acrylonitrile copolymer, a vinylidene chloride copolymer, polyallylate, polyacetal, polychlorotrifluoroethylene, or polyvinylidene fluoride,

a metallized film on which aluminum, silicon oxide, or aluminum oxide is deposited, or

a metal foil of stainless steel, iron, copper, or lead. A combination of the substrates may be a plastic film and another plastic film, a plastic film and a metallized film, or a plastic film and a metal foil.

In the case of the adhesive composition of the present invention, a sufficient bonding performance can be exhibited even when the environmental humidity in a process from coating to aging is high.

Examples

Hereinafter, the present invention will be described in more concrete terms through examples. It is to be noted that the following examples are not limiting. The percentages and the parts indicated in the examples and the comparative examples are all based on mass unless indicated otherwise.

The number-average molecular weights of a polyether polyol, a polyester diol, and so on were obtained through gel permeation chromatography (GPC).

The molecular weights were measured under the following conditions.

model: TOSOH HLC-8220GPC

column: TSKGEL SuperHM-M

solvent: THF

solution flow-out rate: 0.6 mL per minute

temperature: 40°C

detector: differential refractometer

molecular weight standard: polystyrene

The acid value and the hydroxyl value are indicated by mg of KOH in 1 gram of polyol component (B).

The acid value was measured with neutralization titration with KOH, and the hydroxyl value was measured with acetylation that uses pyridine and acetic anhydride.

In addition, the NCO content by percentage represents the amount of isocyanate group present in a sample by the mass fraction. The NCO content by percentage was measured as follows. A toluene solution with excess dibutylamine was added and allowed to react to produce a correspond urea, and then back titration was performed through an indicator titration method by using a hydrochloric acid standard solution.

In addition, the melt viscosity at 60°C was measured with a type B viscometer.

<Component (A1)>

(Synthesis Example 1)

A reaction vessel was charged with 300 parts of polypropylene glycol having a number-average molecular weight of approximately 400 (hereinafter, referred to as P-400), 400 parts of polypropylene glycol having a number-average molecular weight of approximately 2000 (hereinafter, referred to as P-2000), 200 parts of triol having a number-average molecular weight of approximately 400 in which polypropylene glycol was added to glycerin (hereinafter, referred to as P-400-trifunctional), and 1000 parts of 4,4'-MDI, these were heated for three hours at 70°C to 80°C while being stirred in a stream of nitrogen gas to induce a urethanization reaction, and a component that contained a urethane prepolymer (polyether polyurethane polyisocyanate resin) having an isocyanate group in which the isocyanate group content by percentage (hereinafter, also referred to as the NCO group content by percentage) was 14.4% and the isocyanate monomer content by percentage (MDI monomer content by percentage) was 33% was obtained. Hereinafter, this component is denoted as A1-(1).

(Synthesis Examples 2 to 15)

In a similar manner to Synthesis Example 1, components A1-(2) to A1-(15) that each contained a urethane prepolymer (polyether polyurethane polyisocyanate resin) were obtained in accordance with the compositions shown in Table 1.

(Synthesis Example 16)

A reaction vessel was charged with 286.6 parts of 4,4'-MDI and 286.6 parts of 2,4'-diphenylmethane diisocyanate, and these were subjected to an urethanization reaction at 40°C while 426 parts of polypropylene glycol having a number-average molecular weight of approximately 400 was added dropwise at a rate of 1 g/min while being stirred in a stream of nitrogen gas. Upon the dropwise addition having been completed, the above was heated and stirred for 48 hours at 40°C, and a component that contained a urethane prepolymer (polyether polyurethane polyisocyanate resin) having an isocyanate group was obtained. The isocyanate group content by percentage was 10.9%, and the isocyanate (NCO) monomer content by percentage was 10.5%. Hereinafter, this component is denoted as AI-(16).

(Synthesis Example 17)

In a similar manner to Synthesis Example 16, a component AI-(17) that contained a urethane prepolymer (polyether polyurethane polyisocyanate resin) was obtained.

[Table 1]

| | | | polyol | | | isocyanate component (a2) | | | proportion of each component in (a2) (mol%) | | | component (A1) | |
|---|---|---|---|---|---|---|---|---|---|---|---|---|---|
| | | | P-400 | P-2000 | P-400 trifunctional | 4,4'-MDI | 2,4'-MDI | TDI | 4M | 2M | T | NCO group content by percentage (%) | NCO monomer content by percentage (%) |
| Synthesis Examples | 1 | A1-(1) | 4M type | 300 | 400 | 200 | 1000 | | | 100 | | | 14.4 | 33 |
| | 2 | A1-(2) | 4M & 2M type | 300 | 400 | 200 | 700 | 300 | | 70 | 30 | | 14.4 | 33 |
| | 3 | A1-(3) | 4M & 2M type | 300 | 400 | 200 | 400 | 600 | | 40 | 60 | | 14.4 | 33 |
| | 4 | A1-(4) | 4M type | 334 | | | 665 | | | 100 | | | 15.8 | 32 |
| | 5 | A1-(5) | 4M type | 267.1 | | | 732.9 | | | 100 | | | 19.3 | 59 |
| | 6 | A1-(6) | 4M & 2M type | 334 | | | 465.5 | 199.5 | | 70 | 30 | | 15.8 | 32 |
| | 7 | A1-(7) | 4M & 2M type | 334 | | | 332.5 | 332.5 | | 50 | 50 | | 15.8 | 32 |
| | 8 | A1-(8) | 4M & 2M type | 334 | | | 266 | 399 | | 40 | 60 | | 15.8 | 32 |
| | 9 | A1-(9) | 4M & 2M type | 334 | | | 199.5 | 465.5 | | 30 | 70 | | 15.8 | 32 |
| | 10 | A1-(10) | 4M & T type | 334 | | | 352.4 | | 130.3 | 73.5 | | 26.5 | 16.9 | 48 |
| | 11 | A1-(11) | 4M & T type | 363.6 | | | 381.8 | | 254.6 | 51 | | 49 | 18.0 | 51 |
| | 12 | A1-(12) | 4M & T type | 384.8 | | | 314 | | 314 | 41 | | 59 | 18.4 | 53 |
| | 13 | A1-(13) | 4M & T type | 384.8 | | | 215.3 | | 399.9 | 27 | | 73 | 18.9 | 55 |
| | 14 | A1-(14) | 4M & 2M type | 436.3 | | | 268.4 | 268.4 | | 50 | 50 | | 10.4 | 30 |
| | 15 | A1-(15) | 4M & 2M type | 459.7 | | | 270.0 | 270.0 | | 50 | 50 | | 9.1 | 27 |
| | 16 | A1-(16) | 4M & 2M type | 426.9 | | | 286.6 | 286.6 | | 50 | 50 | | 10.9 | 10.5 |
| | 17 | A1-(17) | 4M & 2M type | 437.8 | | | 281.1 | 281.1 | | 50 | 50 | | 10.3 | 9.8 |

4M: 4,4'-MDI

2M: 2,4'-MDI

T: TDI

4M type 4,4'-MDI type; 4M & 2M type: 4,4'-MDI and 2,4'-MDI combined type

4M & T type: 4,4'-MDI and TDI combined type

<Crude MDI (A2)>

The following were used as crude MDI.

A2-(1): the isocyanate group content by percentage of 30%, the MDI monomer content by percentage of 38% (the mass percentage of MDI monomer contained in 100 mass% of crude MDI (A2)), the polymethylene polyphenylene isocyanate (hereinafter, referred to as PMPPhI) content by percentage of 62% (the mass percentage of PMPPhI contained in 100 mass% of crude MDI (A2))

A2-(2): the isocyanate group content by percentage of 32%, the MDI monomer content by percentage of 50%, the PMPPhI content by percentage of 50%

A2-(3): the isocyanate group content by percentage of 28%, the MDI monomer content by percentage of 30%, the PMPPhI content by percentage of 70%

[Table 2]

|  | A2-(1) | A2-(2) | A2-(3) |
|---|---|---|---|
| NCO group content by percentage (%) | 30 | 32 | 28 |
| MDI monomer content by percentage (%) | 38 | 50 | 30 |
| PMPPhI content by percentage (%) | 62 | 50 | 70 |
| PMPPhI: polymethylene polyphenylene isocyanate | | | |

(Formulation Example 101)

A heating vessel was charged with 100 parts of the component A1-(1) obtained in Synthesis Example 1 and 100 parts of the crude MDI A2-(1), these were stirred for 30 minutes in a stream of nitrogen gas, and a polyisocyanate component A-(1) was obtained (the isocyanate group content by percentage: 22.2%, the NCO monomer content by percentage: 35.5%)

(Formulation Examples 102 to 121)

In a similar manner to Formulation Example 101, polyisocyanate components A-(2) to A-(21) were obtained in accordance with the compositions shown in Table 3, 4.

[Table 3]

| | | | NCO group content by percentage (%) | NCO monomer content by percentage (%) | Formulation Examples | | | | | | | | | |
|---|---|---|---|---|---|---|---|---|---|---|---|---|---|---|
| | | | | | 101 | 102 | 103 | 104 | 105 | 106 | 107 | 108 | 109 | 110 |
| | | | | | A-(1) | A-(2) | A-(3) | A-(4) | A-(5) | A-(6) | A-(7) | A-(8) | A-(9) | A-(10) |
| | | | | | 4M type | 4M & 2M type | 4M & 2M type | 4M type | 4M type | 4M & 2M type | 4M & 2M type | 4M & 2M type | 4M & 2M type | 4M type |
| component (A1) | A1-(1) | 4M type | 14.4 | 33 | 100 | | | | | | | | | |
| | A1-(2) | 4M& 2M type | 14.4 | 33 | | 100 | | | | | | | | |
| | A1-(3) | 4M& 2M type | 14.4 | 33 | | | 100 | | | | | | | |
| | A1-(4) | 4M type | 15.8 | 32 | | | | 100 | | | | | | |
| | A1-(5) | 4,4'-MDI type | 19.3 | 59 | | | | | 100 | | | | | |
| | A1-(6) | 4M& 2M type | 15.8 | 32 | | | | | | 100 | | | | |
| | A1-(7) | 4M& 2M type | 15.8 | 32 | | | | | | | 100 | | | |
| | A1-(8) | 4M& 2M type | 15.8 | 32 | | | | | | | | 100 | | |
| | A1-(9) | 4M& 2M type | 15.8 | 32 | | | | | | | | | 100 | |

(continued)

| | | NCO group content by percentage (%) | NCO monomer content by percentage (%) | Formulation Examples 101 A-(1) 4M type | 102 A-(2) 4M & 2M type | 103 A-(3) 4M & 2M type | 104 A-(4) 4M type | 105 A-(5) 4M type | 106 A-(6) 4M & 2M type | 107 A-(7) 4M & 2M type | 108 A-(8) 4M & 2M type | 109 A-(9) 4M & 2M type | 110 A-(10) 4M type |
|---|---|---|---|---|---|---|---|---|---|---|---|---|---|
| A1-(10) | 4M & T type | 16.9 | 48 | | | | | | | | | | 100 |
| A1-(11) | 4M & T type | 18.0 | 51 | | | | | | | | | | |
| A1-(12) | 4M & T type | 18.4 | 53 | | | | | | | | | | |
| Al-(13) | 4M & T type | 18.9 | 55 | | | | | | | | | | |
| A1-(14) | 4M & 2M type | 10.4 | 30 | | | | | | | | | | |
| A1-(15) | 4M & 2M type | 9.1 | 27 | | | | | | | | | | |
| A1-(16) | 4M & 2M type | 10.9 | 10.5 | | | | | | | | | | |
| A1-(17) | 4M & 2M type | 10.3 | 9.8 | | | | | | | | | | |

16

(continued)

| | | NCO group content by percentage (%) | NCO monomer content by percentage (%) | Formulation Examples | | | | | | | | | |
|---|---|---|---|---|---|---|---|---|---|---|---|---|---|
| | | | | 101 | 102 | 103 | 104 | 105 | 106 | 107 | 108 | 109 | 110 |
| | | | | A-(1) | A-(2) | A-(3) | A-(4) | A-(5) | A-(6) | A-(7) | A-(8) | A-(9) | A-(10) |
| | | | | 4M type | 4M & 2M type | 4M & 2M type | 4M type | 4M type | 4M & 2M type | 4M & 2M type | 4M & 2M type | 4M & 2M type | 4M type |
| crude MDI (A2) | A2-(1) | 30 | 38 | 100 | 50 | 10 | 100 | 100 | 100 | 100 | 100 | 100 | |
| | A2-(2) | 32 | 50 | | | | | | | | | | 100 |
| | A3-(3) | 28 | 30 | | | | | | | | | | |
| NCO group content by percentage (%) | | | | 22.2 | 19.6 | 15.8 | 22.9 | 28.7 | 22.9 | 22.9 | 22.9 | 22.9 | 23.9 |
| NCO monomer content by percentage (%) | | | | 35.5 | 34.6 | 33.4 | 34.6 | 48.5 | 34.6 | 34.6 | 34.6 | 34.6 | 49.0 |

EP 3 284 794 B1

[Table 4]

| component (A1) | | | NCO group content by percentage (%) | NCO monomer content by percentage (%) | Formulation Examples | | | | | | | | | | |
|---|---|---|---|---|---|---|---|---|---|---|---|---|---|---|---|
| | | | | | 111 | 112 | 113 | 114 | 115 | 116 | 117 | 118 | 119 | 120 | 121 |
| | | | | | A-(11) | A-(12) | A-(13) | A-(14) | A-(15) | A-(16) | A-(17) | A-(18) | A-(19) | A-(20) | A-(21) |
| | | | | | 4M&T type | 4M&T type | 4M&T type | 4M & 2M type | 4M & 2M type | 4M & 2M type | 4M & 2M type | 4M type | 4M & 2M type | 4M type | 4M & 2M type |
| | A1-(1) | 4M type | 14.4 | 33 | | | | | | | | | | 1 | |
| | A1-(2) | 4M & 2M type | 14.4 | 33 | | | | | | | | | | | |
| | A1-(3) | 4M & 2M type | 14.4 | 33 | | | | | | | | | | | |
| | A1-(4) | 4M type | 15.8 | 32 | | | | | | | | | | | |
| | A1-(5) | 4,4'-MDI type | 19.3 | 59 | | | | | | | | 100 | | | |
| | A1-(6) | 4M & 2M type | 15.8 | 32 | | | | | | | | | | | |
| | A1-(7) | 4M & 2M type | 15.8 | 32 | | | | | | | | | | | |
| | A1-(8) | 4M & 2M type | 15.8 | 32 | | | | | | | | | | | |
| | A1-(9) | 4M & 2M type | 15.8 | 32 | | | | | | | | | | | |

| | | | NCO group content by percentage (%) | NCO monomer content by percentage (%) | Formulation Examples | | | | | | | | | | |
|---|---|---|---|---|---|---|---|---|---|---|---|---|---|---|---|
| | | | | | 111 | 112 | 113 | 114 | 115 | 116 | 117 | 118 | 119 | 120 | 121 |
| | | | | | A-(11) | A-(12) | A-(13) | A-(14) | A-(15) | A-(16) | A-(17) | A-(18) | A-(19) | A-(20) | A-(21) |
| | | | | | 4M&T type | 4M&T type | 4M&T type | 4M & 2M type | 4M & 2M type | 4M & 2M type | 4M & 2M type | 4M type | 4M & 2M type | 4M type | 4M & 2M type |
| | A1-(10) | 4M & T type | 16.9 | 48 | | | | | | | | | | | |
| | A1-(11) | 4M & T type | 18.0 | 51 | 100 | | | | | | | | | | |
| | A1-(12) | 4M & T type | 18.4 | 53 | | 100 | | | | | | | | | |
| | A1-(13) | 4M & T type | 18.9 | 55 | | | 100 | | | | | | | | |
| | A1-(14) | 4M & 2M type | 10.4 | 30 | | | | 100 | | | | | | | |
| | A1-(15) | 4M & 2M type | 9.1 | 27 | | | | | 100 | | | | | | 100 |
| | A1-(16) | 4M & 2M type | 10.9 | 10.5 | | | | | | 100 | | | | | |
| | A1-(17) | 4M & 2M type | 10.3 | 9.8 | | | | | | | 100 | 100 | | | |
| crude MDI (A2) | A2-(1) | | 30 | 38 | | | | 100 | 100 | 100 | 100 | 1 | | | |
| | A2-(2) | | 32 | 50 | 50 | | | | | | | | | 100 | |
| | A3-(3) | | 28 | 30 | | 100 | 50 | | | | | | 0.5 | | 0.1 |
| NCO group content by percentage (%) | | | | | 22.6 | 23.2 | 21.9 | 20.2 | 19.5 | 20.4 | 20.1 | 19.4 | 10.4 | 31.8 | 9.1 |

| | | Formulation Examples | | | | | | | | | | |
|---|---|---|---|---|---|---|---|---|---|---|---|---|
| | | 111 | 112 | 113 | 114 | 115 | 116 | 117 | 118 | 119 | 120 | 121 |
| | | A-(11) | A-(12) | A-(13) | A-(14) | A-(15) | A-(16) | A-(17) | A-(18) | A-(19) | A-(20) | A-(21) |
| NCO group content by percentage (%) | NCO monomer content by percentage (%) | 4M&T type | 4M&T type | 4M&T type | 4M & 2M type | 4M & 2M type | 4M & 2M type | 4M & 2M type | 4M type | 4M & 2M type | 4M type | 4M & 2M type |
| NCO monomer content by percentage (%) | | 51.0 | 41.5 | 46.7 | 34.0 | 32.5 | 24.0 | 23.9 | 58.8 | 9.9 | 49.8 | 27.0 |

<Polyol Component (B)>

(Synthesis Example 201)

A reaction vessel was charged with 438 parts of isophthalic acid (hereinafter, referred to as IPA), 106 parts of ethylene glycol (hereinafter, referred to as EG), and 179 parts of neopentyl glycol (hereinafter, referred to as NPG), and these were heated to 150°C to 240°C while being stirred in a stream of nitrogen gas to induce an esterification reaction. The reaction temperature was brought to 200°C when the acid value became 1.3 (mgKOH/g), the pressure inside the reaction vessel was gradually reduced, the reaction was carried out for 30 minutes at 1.3 kPa or lower, and a polyester diol resin having an acid value of 0.4 (mgKOH/g), a hydroxyl group of 137 (mgKOH/g), and a number-average molecular weight of approximately 800 and having a hydroxyl group at each end was obtained. Hereinafter, this polyol is denoted as a polyester diol (b1)-1.

(Synthesis Examples 202 to 205, 207)

In a similar manner to Synthesis Example 201, polyester diols (b1)-2 to (b1)-5 and a polyester diol (b2)-1 were obtained in accordance with the compositions shown in Table 5.

(Synthesis Example 206)

0.24 parts of trimellitic anhydride was added to the polyester diol (b1)-3 obtained in Synthesis Example 203, a ring-opening reaction was performed for two hours at 180°C, and a polyester diol resin having an acid value of 12.0 (mgKOH/g), a hydroxyl value of 55.1 (mgKOH/g), and a number-average molecular weight of approximately 2100 and having a hydroxyl group and a carboxylic acid at respective ends was obtained. Hereinafter, this resin is denoted as a polyester diol (b1)-6.

[Table 5]

| | | Synthesis Examples | | | | | | |
|---|---|---|---|---|---|---|---|---|
| | | 201 | 202 | 203 | 204 | 205 | 206 | 207 |
| | | (b1)-1 | (bl)-2 | (b1)-3 | (b1)-4 | (b1)-5 | (b1)-6 | (b2)-1 |
| COOH component | IPA | 438 | 373 | | 298 | 186 | | |
| | TPA | | 42 | | | | | |
| | ADA | | | 208 | 262 | 383 | 208 | |
| | CHDA | | | | | | | 310 |
| OH component | EG | 106 | 109 | | 341 | | | |
| | DEG | | | 192 | 219 | | 192 | |
| | NPG | 179 | 182 | | | 429 | | |
| | CHDM | | | | | | | 415 |
| trimellitic anhydride | | | | | | | 0.24 | |
| acid value (mgKOH/g) | | 0.4 | 0.5 | 0.5 | 0.5 | 0.4 | 12 | 2 |
| hydroxyl value (mgKOH/g) | | 137 | 184 | 56.1 | 40.7 | 27.3 | 55.1 | 332 |

(continued)

| | Synthesis Examples | | | | | | |
|---|---|---|---|---|---|---|---|
| | 201 | 202 | 203 | 204 | 205 | 206 | 207 |
| | (b1)-1 | (bl)-2 | (b1)-3 | (b1)-4 | (b1)-5 | (b1)-6 | (b2)-1 |
| Mn | 800 | 600 | 2000 | 2800 | 4000 | 2100 | 300 |

The symbols in the table are as follows.
IPA : isophthalic acid
TPA : terephthalic acid
ADA : adipic acid
CHDA cis-1,4-cyclohexanedicarboxylic acid
EG : ethylene glycol
DEG : diethylene glycol
NPG : neopentyl glycol
CHDM : 1,4-cyclohexanedimethanol

(Formulation Example 301)

92 parts of the polyester diol (b1)-1 obtained in Synthesis Example 201 and 8 parts of diethylene glycol were mixed to obtain a polyol component B-(1).

(Formulation Examples 302-317)

In a similar manner to Formulation Example 301, polyol components B-(2) to B-(8) and B-(10) to B-(17) according to the present invention and comparative polyol component B-(9) were obtained in accordance with the compositions shown in Tables 6 and 7.

[Table 6]

| | | | Formulation Examples | | | | | | | | | |
|---|---|---|---|---|---|---|---|---|---|---|---|---|
| | | | 301 | 302 | 303 | 304 | 305 | 306 | 307 | 308 | 309 | 310 |
| | | | B-(1) | B-(2) | B-(3) | B-(4) | B-(5) | B-6 | B-(7) | B-(8) | B-(9) | B-(10) |
| polyester diol (b1) | Synthesis Example 201 | (b1)-1 Mn = 800 | 92 | 92 | | | | | | | | |
| | Synthesis Example 202 | (b1)-2 Mn = 600 | | | 90 | | | | | 20 | | |
| | Synthesis Example 203 | (b1)-3 Mn = 2000 | | | | 90 | 95 | | | | | |
| | Synthesis Example 204 | (b1)-4 Mn = 2800 | | | | | | 70 | | 70 | | |
| | Synthesis Example 205 | (b1)-5 Mn = 4000 | | | | | | | 60 | | | 55 |
| | Synthesis Example 206 | (b1)-6 Mn = 2100 | | | | | | | | | | |
| polyol (b2) | Synthesis Example 207 | (b2)-1 Mn = 300 | | | | | | | | | 92 | |
| | diethylene glycol Mn = 106 | | 8 | | | 0.1 | 0.1 | | 1 | | 8 | |
| | 2-methyl-1,3-propanediol Mn = 90 | | | 8 | | | | | | | | |
| | tripropylene glycol Mn = 191 | | | | 10 | | | | | | | |
| triol (b3) | glycerin Mn = 92 | | | | | | | 1 | | | | |
| polyether diol (b4) | polypropylene glycol Mn = 400 difunctional | | | | | 9.9 | 4.9 | | 39 | 10 | | 45 |
| | polypropylene glycol Mn = 400 trifunctional | | | | | | | 29 | | | | |
| hydroxyl value (meKOH/p) | | | 211 | 225 | 224 | 77 | 108 | 123 | 129 | 91 | 390 | 133 |

[Table 7]

| | | | Formulation Examples | | | | | | |
|---|---|---|---|---|---|---|---|---|---|
| | | | 311 | 312 | 313 | 314 | 315 | 316 | 317 |
| | | | B-(11) | B-(12) | B-(13) | B-(14) | B-(15) | B-(16) | B-(17) |
| polyester diol (b1) | Synthesis Example 201 | (b1)-1 Mn = 800 | | | | | | | |
| | Synthesis Example 202 | (b1)-2 Mn = 600 | | | | | | | |
| | Synthesis Example 203 | (b1)-3 Mn = 2000 | 90 | | 90 | 90 | 90 | 90 | 90 |
| | Synthesis Example 204 | (b1)-4 Mn = 2800 | | | | | | | |
| | Synthesis Example 205 | (b1)-5 Mn = 4000 | | | | | | | |
| | Synthesis Example 206 | (b1)-6 Mn = 2100 | | 90 | | | | | |
| polyol (b2) | Synthesis Example 207 | (b2)-1 Mn = 300 | | | | | | | |
| | diethylene glycol Mn = 106 | | 0.1 | 0.1 | 0.1 | 0.1 | 0.1 | 0.1 | 0.1 |
| | 2-methyl-1,3-propanediol Mn = 90 | | | | | | | | |
| | tripropylene glycol Mn = 191 | | | | | | | | |
| triol (b3) | glycerin Mn = 92 | | | | | | | | |
| polyether diol (b4) | polypropylene glycol Mn = 400 difunctional | | 9.9 | 9.9 | 9.9 | 9.9 | 9.9 | 9.9 | 9.9 |
| | polypropylene glycol Mn = 400 trifunctional | | | | | | | | |
| (C) | zeolite 2 μm | | 0.75 | | | | | | |
| | talc 2 μm | | | 1.75 | | | | | 1.75 |
| | titanium oxide 1 μm | | | | 5 | | 15 | 16 | |
| | talc 4 μm | | | | | 0.015 | | | 0.3 |
| hydroxyl value (mgKOH/g) | | | 77 | 75 | 74 | 77 | 67 | 67 | 75 |
| "μm" in the (C) column indicates the mean particle size | | | | | | | | | |

(Example 1)

100 parts of the polyisocyanate component A-(1) obtained in Formulation Example 101 and 50 parts of the polyol component B-(1) obtained in Formulation Example 301 were mixed at 60°C to obtain a solventless adhesive composition. After the mixing, the viscosity was measured when one minute had passed, and the viscosity was 300 mPa·s.

The stated solventless adhesive composition contains 281 moles of an isocyanate group derived from the polyisocyanate component A-(1) with respect to 100 moles of a hydroxyl group in the polyol component.

The amount of the isocyanate group with respect to 100 moles of the hydroxyl group is obtained as follows.

$$\text{The amount of the isocyanate group with respect to 100 moles of the hydroxyl group} =$$

$$[\text{isocyanate group (eq.)/hydroxyl group (eq.)}] \times 100$$

$$\text{isocyanate group (eq.)} = \text{NCO content by percentage (mass\%)}/(42 \times 100)$$

$$\text{hydroxyl group (eq.)} = \text{hydroxyl value}/56100$$

The NCO content by percentage (mass%) is obtained in accordance with JIS K7301, and the hydroxyl value is obtained in accordance with JIS K1557-1.

In addition, the total percentage of 4,4'-MDI, 2,4'-MDI, 2,2'-MDI, and TDI (hereinafter, referred to as an isocyanate monomer) contained in 100% of the solventless adhesive composition was 23.7%.

The isocyanate monomer content by percentage is obtained by dividing the total area of the peak area derived from the MDI monomer around Mn = 200 to 300 and the peak area derived from the TDI monomer around Mn = 100 to 200 observed in a GPC chart by the total area of all the peaks observed in the GPC chart.

$$\text{the isocyanate monomer content by percentage (\%)} = (\text{the total of the peak area of the}$$

$$\text{isocyanate monomer/the total area of all the peaks}) \times 100$$

[Fabrication of Laminate]

A surface of a PET (polyethylene terephthalate) film having a thickness of 12 $\mu$m, which serves as a first sheet-like substrate, was coated with the obtained solventless adhesive composition at a temperature of 60°C and at a coating rate of 200 m/min with the use of a solventless test coater. The coating amount was 2 g/m$^2$. This coating surface was overlaid with a deposition surface of an aluminum-deposited unstretched polypropylene film (hereinafter, referred to as VMCPP) having a thickness of 25 $\mu$m, which serves as a second sheet-like substrate, and a laminate in a preparation stage (prelaminate) was obtained.

This prelaminate was aged for one day under the environment of 25°C and 80% RH to cure the adhesive layer, and a laminate was fabricated. With regard to the obtained laminate, the bonding strength of the laminate and the interface condition of the laminate were evaluated in the following methods. The results are shown in Table 8.

(Bonding Strength)

The laminate was cut out to a length of 300 mm and to a width of 15 mm to obtain a test piece. With the use of an instron-type tensile tester, the test piece was pulled at a peel rate of 300 mm/min under the environment of 25°C, and the T-type peel strength (N) between PET and VMCPP at a width of 15 mm was measured. This test was performed five times, and the mean value of the results was obtained and evaluated against the following standards.
A+: bonding strength 1 N or higher
A: bonding strength 0.5 N or higher, less than IN
B: bonding strength less than 0.5N

(Interface Condition of Laminate)

The deposition surface of the laminate was visually inspected through the PET film and the adhesive layer and evaluated against the following standards.
A+: Neither orange-peel texture pattern nor small spot-like pattern is present on the deposition surface, and the adhesive layer is uniform.
A: Some orange-peel texture patterns or small spot-like patterns are observed on the deposition surface but not to a level that poses a problem when the laminate is used.
B: A large amount of orange-peel texture patterns and small spot-like patterns are observed on the deposition surface.

(Examples 2 and 3, Comparative Examples 1 to 6)

Solventless adhesive compositions were obtained through operations similar to that of Example 1 except in that the isocyanate component and the polyol component were used in predetermined proportions as shown in Table 8. In addition, in a similar manner to Example 1, the bonding strength and the coating appearance were evaluated. The results are shown in Table 8.

[Table 8]

| | | | NCO group content by percentage (%) | NCO monomer content by percentage (%) | Examples | | | Comparative Examples | | | | | |
|---|---|---|---|---|---|---|---|---|---|---|---|---|---|
| | | | | | 1 | 2 | 3 | 1 | 2 | 3 | 4 | 5 | 6 |
| isocyanate component | Formulation Example 101 | A-(1) | 22.2 | 35.5 | 100 | | | | | | | | |
| | Formulation Example 102 | A-(2) | 19.6 | 34.6 | | 100 | | | | | | | |
| | Formulation Example 103 | A-(3) | 15.8 | 33.4 | | | 100 | | | | | | |
| | component | Synthesis Example 1 | AI-(l) | 14.4 | 33 | | | | 100 | | | | | |
| | | Synthesis Example 2 | AI-(2) | 14.4 | 33 | | | | | 100 | | | | |
| | | Synthesis Example 3 | A1-(3) | 14.4 | 33 | | | | | | 100 | | | |
| | crude MDI | A2-(1) | 30 | 38 | | | | | | | 100 | | |
| | | A2-(2) | 32 | 50 | | | | | | | | 100 | |
| | | A2-(3) | 28 | 30 | | | | | | | | | 100 |
| polyol component | B-(1) | hydroxyl | value 211 ( | mgKOH/g) | 50 | 50 | 50 | 50 | 50 | 50 | 50 | 50 | 50 |
| the amount (moles) of NCO group with respect to 100 moles of OH group | | | | | 281 | 248 | 200 | 182 | 182 | 182 | 189 | 202 | 177 |
| viscosity at 60°C (mPa·s) | | | | | 300 | 400 | 600 | 400 | 450 | 500 | 50 | 50 | 250 |
| the NCO monomer content by percentage (%) after combining | | | | | 23.7 | 23 | 22.2 | 11 | 11 | 11 | 19 | 25 | 15 |
| bonding strength | | | | | A+ | A+ | A+ | A | A+ | A+ | B | B | B |
| appearance | | | | | A+ | A+ | A+ | B | B | B | A+ | A+ | A+ |
| laminate lamination structure: PET/VMCPP coating condition of adhesive: 60C°C, 200 m/min, 2 g/m² aging condition: 25°C × 80% RT × 1 day | | | | | | | | | | | | | |

Table 8 reveals that Examples 1 to 3 that contain the component (A1) and the crude MDI (A2) as the polyisocyanate component (A) excel in the appearance and the bonding strength as compared to Comparative Examples 1 to 6 in which the component (A1) or the crude MDI (A2) was used alone.

(Examples 4 to 7)

Solventless adhesive compositions were obtained through operations similar to that of Example 1 except in that A-(1) and B-(1) were used as, respectively, the isocyanate component and the polyol component in predetermined proportions as shown in Table 9. Under the condition similar to that of Example 1 (the coating condition of the adhesive: 60°C, 200 m/min, 2 g/m$^2$; the aging condition: 25°C $\times$ 80% RT $\times$ 1 day), laminates having a lamination structure of PET/VMCPP and laminates having a lamination structure of PET/VMPET that are formed with the use of an aluminum deposited PET film (hereinafter, referred to as VMPET) in place of VMCPP were obtained. The bonding strength and the coating appearance were evaluated in a similar manner to Example 1. The results are shown in Table 9.

Furthermore, the peel strength of a PET/VMPET laminate that was aged under the condition of 25°C $\times$ 80% RT $\times$ 2 days under the environment of 80°C was obtained in a similar manner to that of the case of 25°C and evaluated. The results are shown in Table 9.

[Table 9]

| | | NCO group content by percentage (%) | NCO monomer content by percentage (% ) | Examples | | | | |
|---|---|---|---|---|---|---|---|---|
| | | | | 4 | 5 | 6 | 1 | 7 |
| isocyanate component | Formulation Example 101: A-(1) | 22.2 | 35.5 | 50 | 50 | 70 | 100 | 120 |
| polyol component | Formulation Example 301: B-(1) | hydroxyl value 211 (mgKOH/g) | | 65 | 50 | 50 | 50 | 50 |
| the amount (moles) of NCO group with respect to 100 moles of OH group | | | | 108 | 140 | 196 | 281 | 337 |
| viscosity at 60°C (mPa·s) | | | | 600 | 500 | 500 | 300 | 250 |
| the NCO monomer content by percentage (%) after combining | | | | 15.4 | 17.8 | 20.7 | 23.7 | 25 |
| PET/ VMCPP | bonding strength 1 (25°C), aging: 1 day | | | A$^+$ | A$^+$ | A$^+$ | A$^+$ | A$^+$ |
| | appearance, aging: 1 day | | | A$^+$ | A$^+$ | A$^+$ | A$^+$ | A$^+$ |
| PET/ VMPET | bonding strength 1 (25°C), aging: 1 day | | | A$^+$ | A$^+$ | A$^+$ | A$^+$ | A$^+$ |
| | appearance, aging: 1 day | | | A$^+$ | A$^+$ | A$^+$ | A$^+$ | A |
| | bonding strength 2 (80°C), aging: 2 days | | | A | A$^+$ | A$^+$ | A $^+$ | A$^+$ |
| coating condition of adhesive: 60°C, 200 m/min, 2 g/m$^2$<br>aging condition 25°C $\times$ 80% RT $\times$ 1 day or 2 days<br>bonding strength 1: aged at 25°C $\times$ 80% RT $\times$ 1 day, measured at an environmental temperature of 25°C.<br>bonding strength 2: aged at 25°C $\times$ 80% RT $\times$ 2 days, measured at an environmental temperature of 80°C. | | | | | | | | |

As shown in Table 9, Examples 5, 6, and 1 in which, when the number of moles of the hydroxyl group in the polyol component (B) is 100 moles, the number of moles of the isocyanate group in the polyisocyanate component (A) is no less than 120 moles nor more than 300 moles excel in the bonding strength at a high temperature as compared to Example 4 in which the number of moles of the isocyanate group is less than 120. In addition, Examples 5, 6, and 1 also excel in the appearance as compared to Example 7 in which the number of moles of the isocyanate group exceeds 300 moles.

(Examples 8 to 11)

Solventless adhesive compositions were obtained through operations similar to that of Example 1 except in that the isocyanate component and the polyol component were used in predetermined proportions as shown in Table 10 and the content by percentage of the isocyanate monomer contained in 100% of the formulated solventless adhesive composition was varied.

Under the condition similar to that of Example 1 (the coating condition of the adhesive: 60°C, 200 m/min, 2 g/m$^2$; the aging condition: 25°C $\times$ 80% RT $\times$ 1 day), laminates having a lamination structure of PET/VMCPP were obtained.

By using VMPET in place of VMCPP, laminates having a lamination structure of PET/VMPET were obtained under the following condition: the coating condition of the adhesive: 60°C, 200 m/min or 250 m/min, 2 g/m$^2$; the aging condition: 25°C $\times$ 80% RT $\times$ 1 day or 2 days. The bonding strength and the coating appearance were evaluated in a similar manner to Example 1.

In addition, the PET/VMPET laminate obtained by coating at 60°C and 250 m/min and by aging at 25°C $\times$ 80% RT $\times$ 1 day was evaluated for the appearance in a similar manner to Example 1.

Furthermore, the peel strength of the PET/VMPET laminate that was aged at 25°C $\times$ 80% RT $\times$ 2 days under the environment of 80°C was obtained in a similar manner to that of the case of 25°C and evaluated. The results are shown in Table 10.

[Table 10]

| | | | | NCO group content by percentage (%) | NCO monomer content by percentage (%) | Examples | | | | | |
|---|---|---|---|---|---|---|---|---|---|---|---|
| | | | | | | 8 | 9 | 10 | 11 | 5 | 1 |
| isocyanate component | Formulation Example 101 | A-(1) | 4M type | 22.2 | 35.5 | | | | | 50 | 100 |
| | Formulation Example 104 | A-(4) | 4M type | 22.9 | 34.6 | | | 50 | 80 | | |
| | Formulation Example 119 | A-(19) | 4M & 2M type | 10.4 | 9.9 | 40 | 70 | | | | |
| polyol component | Formulation Example 301 | B-(1) | hydroxyl value 211 (mgKOH/g) | | | | | | | 50 | 50 |
| | Formulation Example 304 | B-(4) | hydroxyl value 77 (mgKOH/g) | | | | | 100 | 100 | | |
| | Formulation Example 305 | B-(5) | hydroxyl value 108 (mgKOH/g) | | | 100 | 100 | | | | |
| the amount (moles) of NCO group with respect to 100 moles of OH group | | | | | | 80 | 140 | 198 | 278 | 140 | 281 |
| viscosity at 60°C (mPa·s) | | | | | | 2100 | 2100 | 200 | 600 | 500 | 300 |
| the NCO monomer content by percentage (%) after combining | | | | | | 2.8 | 4 | 11.5 | 14.2 | 17.8 | 23.7 |
| PET/VMCPP | 60°C, 200 m/min | | bonding strength 1 (25°C), aging: 1 day | | | A+ | A+ | A+ | A+ | A+ | A+ |
| | | | appearance, aging: 1 day | | | A+ | A+ | A+ | A+ | A+ | A+ |
| PET/VMPET | 60°C, 200 m/min | | bonding strength 1 (25°C), aging: 1 day | | | A+ | A+ | A+ | A+ | A+ | A+ |
| | | | appearance, aging: 1 day | | | A+ | A+ | A+ | A+ | A+ | A+ |
| | 60°C, 250 m/min | | appearance, aging: 1 day | | | A+ | A+ | A+ | A+ | A | A |
| | 60°C, 200 m/min | | bonding strength 2 (80°C), aging: 2 days | | | A | A+ | A+ | A+ | A+ | A+ |

coating condition of adhesive: 60°C, 200 m/min or 250 m/min, 2 g/m$^2$
aging condition 25°C × 80% RT × 1 day or 2 days
bonding strength 1: aged at 25°C × 80% RT × 1 day, measured at an environmental temperature of 25°C.
bonding strength 2: aged at 25°C × 80% RT × 2 days, measured at an environmental temperature of 80°C.

As shown in Table 10, Examples 9 to 11 in which the total amount of 4,4'-MDI, 2,4'-MDI, 2,2'-MDI, and TDI contained in the total of 100 mass% of the polyisocyanate component (A) and the polyol component (B) is 4 to 15 mass% excel in the bonding strength at a high temperature as compared to Example 8 in which the total amount of the monomers is less than 4 mass%. In addition, Examples 8 to 11 excel in the coating appearance as compared to Examples 5 and 1 in which the total amount of the monomers exceeds 15 mass%.

(Examples 12-19, 10)

Solventless adhesive compositions were obtained through operations similar to that of Example 1 except in that the isocyanate component and B-(4) serving as the polyol component were used in predetermined proportions as shown in Table 11.

Hereinafter, as in Examples 8 to 11, PET/VMCPP laminates and PET/VMPET laminates were obtained and evaluated in a similar manner. The results are shown in Table 11.

[Table 11]

| | | | | NCO group content by percentage (%) | NCO monomer content by percentage (%) | Examples | | | | | | | | |
|---|---|---|---|---|---|---|---|---|---|---|---|---|---|---|
| | | | | | | 12 | 13 | 14 | 15 | 16 | 17 | 18 | 19 | 10 |
| isocyanate component | Formulation Example 104 | A-(4) | 4M type | 22.9 | 34.6 | | | | | | | | | 50 |
| | Formulation Example 120 | A-(20) | 4M type | 31.8 | 49.8 | 50 | | | | | | | | |
| | Formulation Example 121 | A-(21) | 4M&2M type | 9.1 | 27.0 | | 50 | | | | | | | |
| | Formulation Example 105 | A-(5) | 4M type | 28.7 | 48.5 | | | 50 | | | | | | |
| | Formulation Example 114 | A-(14) | 4M&2M type | 20.2 | 34.0 | | | | 50 | | | | | |
| | Formulation Example 115 | A-(15) | 4M&2M type | 19.5 | 32.5 | | | | | 50 | | | | |
| | Formulation Example 116 | A-(16) | 4M&2M type | 20.4 | 24.0 | | | | | | 50 | | | |
| | Formulation Example 117 | A-(17) | 4M&2M type | 20.1 | 23.9 | | | | | | | 50 | | |
| | Formulation Example 118 | A-(18) | 4M type | 19.4 | 58.8 | | | | | | | | 50 | |
| polyol component | Formulation Example 304 | B-(4) | hydroxyl value 77 (mgKOH/g) | | | 100 | 100 | 100 | 100 | 100 | 100 | 100 | 100 | 100 |
| the amount (moles) of NCO group with respect to 100 moles of OH group | | | | | | 275 | 78 | 248 | 175 | 169 | 176 | 174 | 168 | 198 |
| viscosity at 60°C (mPa·s) | | | | | | 150 | 1900 | 2100 | 1000 | 150 | 2200 | 200 | 150 | 200 |
| the NCO monomer content by percentage (%) after combining | | | | | | 16.6 | 9 | 16.1 | 11.3 | 10.83 | 8 | 8 | 19.6 | 11.5 |

(continued)

| | | | | Examples | | | | | | | | |
|---|---|---|---|---|---|---|---|---|---|---|---|---|
| | | NCO group content by percentage (%) | NCO monomer content by percentage (%) | 20 | 19 | 18 | 17 | 16 | 15 | 14 | 13 | 12 |
| PET/ VMCPP | 60°C, 200 m/min | bonding strength 1 (25°C), aging: 1 day | | A+ | A+ | A+ | A+ | A+ | A+ | A+ | A+ | A+ |
| | | appearance, aging: 1 day | | A+ | A+ | A+ | A+ | A+ | A+ | A+ | A+ | A+ |
| PET/VMPET | 60°C, 200 m/min | bonding strength 1 (25°C), aging: 1 day | | A+ | A+ | A+ | A+ | A+ | A+ | A+ | A+ | A+ |
| | | appearance, aging: 1 day | | A+ | A+ | A+ | A+ | A+ | A+ | A+ | A+ | A+ |
| | 60°C, 250 m/min | appearance, aging: 1 day | | A+ | A | A | A+ | A | A+ | A | A+ | A |
| | 60°C, 200 m/min | bonding strength 2 (80°C), aging: 2 days | | A+ | A+ | A+ | A+ | A+ | A+ | A+ | A | A+ |

coating condition of adhesive: 60°C, 200 m/min or 250 m/min, 2 g/m²
aging condition 25°C × 80% RT × 1 day or 2 days
bonding strength 1: aged at 25°C × 80% RT × 1 day , measured at an environmental temperature of 25°C.
bonding strength 2: aged at 25°C × 80% RT × 2 days, measured at an environmental temperature of 80°C.

33

Table 11 reveals that Examples 10, 15, and 17 in which the NCO group content by percentage in the polyisocyanate component (A) is 10 to 30 mass% excel in the coating appearance as compared to Example 12 in which the NCO group content by percentage in the polyisocyanate component (A) is 31.8 mass%.

In addition, Examples 10, 15, and 17 excel in the bonding strength at a high temperature as compared to Example 13 in which the NCO group content by percentage in the polyisocyanate component (A) is 9.1 mass%.

In addition, Examples 10, 15, and 17 use A-(4), A-(14), and A-(16), respectively, and A-(4), A-(14), and A-(16) are obtained by combining A1-(4), A1-(14), and A1-(16), respectively, in which the NCO group content by percentage in the component (A1) is no less than 10 mass% and less than 18 mass%. Meanwhile, Example 16 uses A-(15), and A-(15) is obtained by combining A1-(15) in which the NCO group content by percentage in the component (A1) is 9.1 mass%. Example 10, Example 15, and Example 17 excel in the bonding strength at a high temperature as compared to Example 16.

Furthermore, Examples 10, 15, and 17 use the components A1-(4), A1-(14), and A1-(16), respectively, in which the total amounts of 4,4'-MDI, 2,4'-MDI, 2,2'-MDI, and TDI are 32 mass%, 30 mass%, and 10.5 mass%, respectively. Examples 10, 15, and 17 excel in the bonding strength at a high temperature as compared to Example 18 that uses the component A1-(17) in which the total amount of 4,4'-MDI, 2,4'-MDI, 2,2'-MDI, and TDI is 9.8 mass%.

In addition, Examples 10, 15, 16, and 17 that use A1-(4), A1-(14), A1-(15), and A1-(16), respectively, in which the total amount of 4,4'-MDI, 2,4'-MDI, 2,2'-MDI, and TDI is 10 to 30 mass%, excel in the appearance during coating as compared to Examples 14 and 19 that use the component A1-(5) in which the total amount of 4,4'-MDI, 2,4'-MDI, 2,2'-MDI, and TDI is 59 mass%.

(Examples 20 to 27, 10)

Solventless adhesive compositions were obtained through operations similar to that of Example 1 except in that the isocyanate component in which the type of the component (A1) or the type of the crude MDI is varied and B-(4) serving as the polyol component were used in predetermined proportions as shown in Table 12.

Under the condition similar to that of Example 1 (the coating condition of the adhesive: 60°C, 200 m/min, 2 g/m$^2$; the aging condition: 25°C $\times$ 80% RT $\times$ 1 day), laminates having a lamination structure of PET/VMCPP were obtained.

By using VMPET in place of VMCPP, laminates having a lamination structure of PET/VMPET were obtained under the following condition: the coating condition of the adhesive: 60°C or 50°C, 200 m/min or 250 m/min, 2 g/m$^2$; the aging condition: 25°C $\times$ 80% RT $\times$ 1 day or 2 days.

The PET/VMPET laminate obtained by coating at 60°C, 200 m/min, and 2 g/m$^2$ and by aging at 25°C $\times$ 80% RT $\times$ 1 day was evaluated for the bonding strength and the coating appearance in a similar manner to Example 1.

The PET/VMPET laminates obtained by coating at 60°C and 250 m/min or at 50°C and 200 m/min and by aging at 25°C $\times$ 80% RT $\times$ 1 day were evaluated for the appearance in a similar manner to Example 1.

Furthermore, the peel strength of the PET/VMPET laminate that was coated at 60°C and 200 m/min and aged at 25°C $\times$ 80% RT $\times$ 2 days under the environment of 80°C was obtained in a similar manner to that of the case of 25°C and evaluated. The results are shown in Table 12.

[Table 12]

| | | | | NCO group content by percentage (%) | NCO monomer content by percentage (%) | Examples | | | | | | | | |
|---|---|---|---|---|---|---|---|---|---|---|---|---|---|---|
| | | | | | | 20 | 21 | 22 | 23 | 24 | 25 | 26 | 27 | 10 |
| isocyanate component | Formulation Example 104 | A-(4) | 4M type | 22.9 | 34.6 | | | | | | | | | 50 |
| | Formulation Example 106 | A-(6) | 4M & 2M type | 22.9 | 34.6 | 50 | | | | | | | | |
| | Formulation Example 107 | A-(7) | 4M & 2M type | 22.9 | 34.6 | | 50 | | | | | | | |
| | Formulation Example 108 | A-(8) | 4M & 2M type | 22.9 | 34.6 | | | 50 | | | | | | |
| | Formulation Example 109 | A-(9) | 4M & 2M type | 22.9 | 34.6 | | | | 50 | | | | | |
| | Formulation Example 110 | A-(10) | 4M & T type | 23.9 | 49.0 | | | | | 40 | | | | |
| | Formulation Example 111 | A-(11) | 4M & T type | 22.6 | 51.0 | | | | | | 40 | | | |
| | Formulation Example 112 | A-(12) | 4M & T type | 23.2 | 41.5 | | | | | | | 40 | | |
| | Formulation Example 113 | A-(13) | 4M & T type | 21.9 | 46.7 | | | | | | | | 40 | |
| polyol component | Formulation Example 304 | B-(4) | | hydroxyl value 77 (mgKOH/g) | | 100 | 100 | 100 | 100 | 100 | 100 | 100 | 100 | 100 |
| the amount (moles) of NCO group with respect to 100 moles of OH group | | | | | | 198.6 | 198.6 | 198.6 | 198.6 | 165 | 156 | 160 | 151 | 198 |

EP 3 284 794 B1

(continued)

| | | | NCO group content by percentage (%) | NCO monomer content by percentage (%) | Examples | | | | | | | | |
|---|---|---|---|---|---|---|---|---|---|---|---|---|---|
| | | | | | 20 | 21 | 22 | 23 | 24 | 25 | 26 | 27 | 10 |
| viscosity at 60°C (mPa·s) | | | | | 150 | 170 | 200 | 250 | 200 | 150 | 150 | 100 | 200 |
| the NCO monomer content by percentage (%) after combining | | | | | 11.5 | 11.5 | 11.5 | 11.5 | 14 | 14.6 | 11.8 | 13.3 | 11.5 |
| PET/ VMCPP | 60°C, 200 m/min | bonding strength 1 (25°C), aging: 1 day | | | $A^+$ | $A^+$ | $A^+$ | A | $A^+$ | $A^+$ | $A^+$ | A | $A^+$ |
| | | bonding strength 1 (25°C), aging: 2 days | | | $A^+$ | $A^+$ | $A^+$ | $A^+$ | $A^+$ | $A^+$ | $A^+$ | $A^+$ | $A^+$ |
| | | appearance, aging: 1 day | | | $A^+$ | $A^+$ | $A^+$ | $A^+$ | $A^+$ | $A^+$ | $A^+$ | $A^+$ | $A^+$ |
| PET/ VMPET | 60°C, 200 m/min | bonding strength 1 (25°C), aging: 1 day | | | $A^+$ | $A^+$ | $A^+$ | A | $A^+$ | $A^+$ | $A^+$ | A | $A^+$ |
| | | bonding strength 1 (25°C), aging: 2 days | | | $A^+$ | A | $A^+$ | $A^+$ | $A^+$ | $A^+$ | $A^+$ | $A^+$ | $A^+$ |
| | | appearance, aging: 1 day | | | $A^+$ | $A^+$ | $A^+$ | $A^+$ | $A^+$ | $A^+$ | $A^+$ | $A^+$ | $A^+$ |
| | 60°C, 250 m/min | appearance, aging: 1 day | | | $A^+$ | $A^+$ | $A^+$ | $A^+$ | $A^+$ | $A^+$ | $A^+$ | $A^+$ | $A^+$ |
| | 50°C, 200 m/min | appearance, aging: 1 day | | | $A^+$ | $A^+$ | $A^+$ | $A^+$ | $A^+$ | $A^+$ | $A^+$ | $A^+$ | A |
| | 60°C, 200 m/min | bonding strength 2 (80°C), aging: 2 days | | | $A^+$ | $A^+$ | $A^+$ | $A^+$ | $A^+$ | $A^+$ | $A^+$ | $A^+$ | $A^+$ |

coating condition of adhesive: 60°C or 50°C, 200 m/min or 250 m/min, 2 g/m$^2$
aging condition 25°C × 80% RT × 1 day or 2 days
bonding strength 1: aged at 25°C × 80% RT × 1 day, measured at an environmental temperature of 25°C.
bonding strength 2: aged at 25°C × 80% RT × 2 days, measured at an environmental temperature of 80°C.

Examples 10 and 20 to 27 result in a favorable appearance under the coating condition of 60°C and 250 m/min.

As compared to Example 10 in which A-(4) of a 4,4'-MDI type is used as the isocyanate component, Examples 20 to 23 in which A-(6) to A-(9) of a 4,4'-MDI and 2,4'-MDI combined type are used and Examples 24 to 27 in which A-(10) to A-(13) of a 4,4'-MDI and TDI combined type are used excel in the appearance under the coating condition of 50°C and 200 m/min.

Example 23 uses the isocyanate component A-(9), and the isocyanate component A-(9) uses the component A1-(9). 2,4'-MDI used to obtain the component A1-(9) is 70 mol% in 100 mol% of the isocyanate component (a2).

In addition, Example 27 uses the isocyanate component A-(13), and the isocyanate component A-(13) uses the component A1-(13). TDI used to obtain the component A1-(13) is 70 mol% in 100 mol% of the isocyanate component (a2).

Therefore, Examples 20, 21, 22, 24, 25, and 26 that contain the components A-(6), A-(7), A-(8), A-(10), A-(11), and A-(12), respectively, formed using the isocyanate component (a2) that contains 40 to 60 mol% of 4,4'-MDI in 100 mol% isocyanate component (a2) cure more easily than Examples 23 and 27 described above, and thus the bonding strength in a one-day aging is higher.

(Examples 28 to 32, 34, 21) (Comparative Example 33)

Solventless adhesive compositions were obtained through operations similar to that of Example 1 except in that the isocyanate component and various types of polyol components were used in predetermined proportions as shown in Table 13.

Hereinafter, as in Examples 20 to 27, PET/VMCPP laminates and PET/VMPET laminates were obtained and evaluated in a similar manner. The results are shown in Table 13.

[Table 13]

| | | | | NCO group content by percentage (%) | NCO monomer content by percentage (%) | Examples | | | | | | | |
|---|---|---|---|---|---|---|---|---|---|---|---|---|---|
| | | | | | | 28 | 29 | 30 | 31 | 32 | 33 | 34 | 21 |
| isocyanate component | Formulation Example 116 | A-(16) | 4M & 2M type | 20.4 | 24 | 90 | 90 | | | | 200 | | |
| | Formulation Example 7 | A-(7) | 4M & 2M type | 22.9 | 34.6 | | | 70 | 70 | 70 | | 70 | 50 |
| polyol component | Formulation Example 302 | B-(2) | hydroxyl value 225 (mgKOH/g) | | | 55 | | | | | | | |
| | Formulation Example 303 | B-(3) | hydroxyl value 224 (mgKOH/g) | | | | 55 | | | | | | |
| | Formulation Example 304 | B - (4) | hydroxyl value 77 (mgKOH/g) | | | | | | | | | | 100 |
| | Formulation Example 306 | B-(6) | hydroxyl value 123 (mgKOH/g) | | | | | 100 | | | | | |
| | Formulation Example 307 | B-(7) | hydroxyl value 129 (mgKOH/g) | | | | | | 100 | | | | |
| | Formulation Example 308 | B-(8) | hydroxyl value 91 (mgKOH/g) | | | | | | | 100 | | | |
| | Formulation Example 309 | B-(9) | hydroxyl value 390 (mgKOH/g) | | | | | | | | 100 | | |
| | Formulation Example 310 | B-(10) | hydroxyl value 133 (mgKOH/g) | | | | | | | | | 100 | |
| the amount (moles) of NCO group with respect to 100 moles of OH group | | | | | | 198 | 198.6 | 174 | 165 | 235.3 | 139.7 | 160 | 198.6 |
| viscosity at 60°C (mPa·s) | | | | | | 100 | 170 | 550 | 1200 | 350 | 200 | 150 | 170 |
| the NCO monomer content by percentage (%) after combining | | | | | | 14.9 | 14.9 | 14.2 | 14.2 | 14.2 | 16 | 14.2 | 11.5 |
| PET/VMCPP | 60°C, 200 m/min | | bonding strength 1 (25°C), aging: 1 day | | | A⁺ | A⁺ | A⁺ | A⁺ | A⁺ | A⁺ | A | A⁺ |
| | | | appearance, aging: 1 day | | | A⁺ | A⁺ | A⁺ | A⁺ | A⁺ | A⁺ | A⁺ | A⁺ |

EP 3 284 794 B1

38

| | | | NCO group content by percentage (%) | NCO monomer content by percentage (%) | Examples | | | | | | | |
|---|---|---|---|---|---|---|---|---|---|---|---|---|
| | | | | | 28 | 29 | 30 | 31 | 32 | 33 | 34 | 21 |
| PET/VMPET | 60°C, 200 m/min | | bonding strength 1 (25°C), aging: 1 day | | A$^+$ | A$^+$ | A$^+$ | A$^+$ | A$^+$ | A$^+$ | A$^+$ | A$^+$ |
| | | | appearance, aging: 1 day | | A$^+$ | A$^+$ | A$^+$ | A$^+$ | A$^+$ | A$^+$ | A | A$^+$ |
| | 60°C, 250 m/min | | appearance, aging: 1 day | | A$^+$ | A | A$^+$ | A$^+$ | A$^+$ | A | A$^+$ | A$^+$ |
| | 50°C, 200 m/min | | appearance, aging: 1 day | | A$^+$ | A$^+$ | A$^+$ | A | A$^+$ | A | A | A$^+$ |
| | 60°C, 200 m/min | | bonding strength 2 (80°C), aging: 2 days | | A$^+$ | A$^+$ | A$^+$ | A$^+$ | A$^+$ | A | A | A$^+$ |

coating condition of adhesive: 60°C or 50°C, 200 m/min or 250 m/min, 2 g/m$^2$

aging condition 25°C × 80% RT × 1 day or 2 days bonding strength 1: aged at 25°C × 80% RT × 1 day, measured at an environmental temperature of 25°C.

bonding strength 2: aged at 25°C × 80% RT × 2 days, measured at an environmental temperature of 80°C.

Examples 28, 29, 30, 32, and 21 use the polyester diol (b1) having a number-average molecular weight of no less than 500 nor more than 3,000 as the polyol component (B) and thus excel in the appearance even when coating is performed at a lower temperature as compared to Example 31 that uses a polyester diol having a number-average molecular weight of more than 3,000. In addition, as compared to Comparative Example 33 that uses a polyester diol having a number-average molecular weight of less than 500, Examples 28, 29, 30, 32, and 21 also excel in the high-speed coating performance at 60°C and the bonding strength at a high temperature.

In Examples 28, 29, 30, 32, and 21, the amount of the polyester diol (b1) is no less than 60 mass% in the polyol component (B), and thus Examples 28, 29, 30, 32, and 21 excel in the bonding strength and the appearance as compared to Example 34 in which the stated amount is less than 60 mass%.

(Examples 35 to 41, 21) (Comparative Examples 7 to 10)

Solventless adhesive compositions were obtained through operations similar to that of Example 1 except in that the isocyanate component and various types of polyol components were used in predetermined proportions as shown in Table 14.

Under the condition similar to that of Example 1 (the coating condition of the adhesive: 60°C, 200 m/min, 2 g/m$^2$; the aging condition: 25°C $\times$ 80% RT $\times$ 1 day), laminates having a lamination structure of PET/VMCPP were obtained.

By using VMPET in place of VMCPP, laminates having a lamination structure of PET/VMPET were obtained under the following condition: the coating condition of the adhesive: 60°C or 50°C, 200 m/min or 250 m/min, 2 g/m$^2$; the aging condition: 25°C $\times$ 80% RT $\times$ 1 day or 2 days.

The PET/VMPET laminate obtained by coating at 60°C, 200 m/min, and 2 g/m$^2$ and by aging at 25°C $\times$ 80% RT $\times$ 1 day was evaluated for the bonding strength and the coating appearance in a similar manner to Example 1.

The PET/VMPET laminates obtained by coating at 60°C and 250 m/min, at 50°C and 200 m/min, or at 50°C and 250 m/min and by aging at 25°C $\times$ 80% RT $\times$ 1 day were evaluated for the appearance in a similar manner to Example 1.

Furthermore, the peel strength of the PET/VMPET laminate that was coated at 60°C and 200 m/min and aged at 25°C $\times$ 80% RT $\times$ 2 days under the environment of 80°C was obtained in a similar manner to that of the case of 25°C and evaluated. The results are shown in Table 14.

[Table 14]

| component | | type | NCO group content by percentage (%) | NCO monomer content by percentage (%) | Examples | | | | | | | | Comparative Examples | | | |
|---|---|---|---|---|---|---|---|---|---|---|---|---|---|---|---|---|
| | | | | | 35 | 36 | 37 | 38 | 39 | 40 | 41 | 21 | 7 | 8 | 9 | 10 |
| isocyanate component | A-(7) Formulation Example 7 | 4M & 2M type | 22.9 | 34.6 | 50 | 50 | 50 | 50 | 50 | 50 | 50 | 50 | | | | |
| | A1-(1) Synthesis Example 1 | 4M type | 14.4 | 33 | | | | | | | | | 100 | 100 | | |
| | A2-(1) | | 30 | 38 | | | | | | | | | | | 50 | 50 |
| polyol component | B-(4) Formulation Example 304 | | hydroxyl value 77 (mg-KOH/g) | | | | | | | | | 100 | 100 | | 100 | |
| | B-(11) Formulation Example 311 | zeolite-containing | hydroxyl value 77 (mg-KOH/g) | | 100.75 | | | | | | | | | 100.75 | | 100.75 |
| | B-(12) Formulation Example 312 | talc-containing | hydroxyl value 75 (mg-KOH/g) | | | 101.75 | | | | | | | | | | |
| | B-(13) Formulation Example 313 | titanium oxide-containing | hydroxyl value 74 (mg-KOH/g) | | | | 105 | | | | | | | | | |
| | B-(14) Formulation Example 314 | talc-containing | hydroxyl value 77 (mg-KOH/g) | | | | | 100.015 | | | | | | | | |
| | B-(15) Formulation Example 315 | titanium oxide-containing | hydroxyl value 70 (mg-KOH/g) | | | | | | 115 | | | | | | | |
| | B-(16) Formulation Example 316 | titanium oxide-containing | hydroxyl value 69 (mg-KOH/g) | | | | | | | 116 | | | | | | |
| | B-(17) Formulation Example 317 | talc-containing | hydroxyl value 75 (mg-KOH/g) | | | | | | | | 102.05 | | | | | |

| | NCO group content by percentage (%) | NCO mono-mer content by percent-age (%) | Examples | | | | | | | | Comparative Examples | | | |
|---|---|---|---|---|---|---|---|---|---|---|---|---|---|---|
| | | | 35 | 36 | 37 | 38 | 39 | 40 | 41 | 21 | 7 | 8 | 9 | 10 |
| the amount (moles) of NCO group with respect to 100 moles of OH group | | | 198.6 | 198.6 | 198.6 | 198.6 | 198.6 | 198.6 | 198.6 | 198.6 | 249 | 249 | 260 | 260 |
| viscosity at 60°C (mPa·s) | | | 170 | 170 | 170 | 170 | 170 | 170 | 170 | 170 | 300 | 300 | 50 | 50 |
| the NCO monomer content by percentage (%) after combining | | | 11.5 | 11.5 | 11.5 | 11.5 | 11.5 | 11.5 | 11.5 | 11.5 | 16.5 | 16.5 | 12.6 | 12.6 |
| the amount of particles with respect to the total of 100 parts by mass of the isocyanate component and the polyol component | | | 0.5 | 1.2 | 3.3 | 0.01 | 10.0 | 10.7 | 1.4 | 0.0 | 0 | 0.4 | 0 | 0.4 |
| PET/VMCPP — 60°C, 200 m/min — bonding strength 1 (25°C), aging: 1 day | | | A+ | A+ | A+ | A+ | A | A+ | A+ | A+ | A+ | A+ | A | A |
| PET/VM-CPP — 60°C, 200 m/min — appearance, aging: 1 day | | | A+ | A+ | A+ | A+ | A | A+ | A+ | A+ | B | B | A+ | A |
| PET/VMPET — 60°C, 200 m/min — bonding strength 1 (25°C), aging: 1 day | | | A+ | A+ | A+ | A+ | A | A+ | A+ | A+ | A+ | A+ | A | A |
| PET/VMPET — 60°C, 200 m/min — appearance, aging: 1 day | | | A+ | A+ | A+ | A+ | A | A+ | A+ | A+ | B | B | A+ | A |
| PET/VM-PET — 60°C. 250 m/min — appearance, aging: 1 day | | | A+ | A+ | A+ | A+ | A | A+ | A+ | A+ | B | B | A+ | A |
| PET/VM-PET — 50°C, 200 m/min — appearance, aging: 1 day | | | A+ | A+ | A+ | A+ | A | A+ | A+ | A+ | B | B | A+ | A |
| PET/VM-PET — 50°C 250 m/min — appearance, aging: 1 day | | | A+ | A+ | A+ | A+ | A | A | A+ | A | B | B | A+ | A |
| PET/VMPET — 60°C, 200 m/min — bonding strength 2 (80°C), aging: 2 days | | | A+ | A+ | A+ | A+ | A | A+ | A+ | A+ | A+ | A+ | A+ | A |

coating condition of adhesive: 60°C or 50°C, 200 m/min or 250 m/min, 2 g/m$^2$
aging condition 25°C × 80% RT × 1 day or 2 days
bonding strength 1: aged at 25°C × 80% RT × 1 day, measured at an environmental temperature of 25°C.
bonding strength 2: aged at 25°C × 80% RT × 2 days, measured at an environmental temperature of 80°C.

EP 3 284 794 B1

42

Table 14 reveals that Examples 35 to 40 that contain 0.01 to 10 parts by mass of the particles (C) having a mean particle size of no less than $1 \times 10^{-4}$ mm nor more than $4 \times 10^{-4}$ mm with respect to the total of 100 parts by mass of the polyisocyanate component (A) and the polyol component (B) excel in the high-speed coating performance even at a low temperature as compared to Example 21 that does not contain the particles (C) and Example 40 that contains 10.7 parts by mass of the particles (C) having a mean particle size of no less than $1 \times 10^{-4}$ mm nor more than $4 \times 10^{-4}$ mm with respect to the total of 100 parts by mass of the polyisocyanate component (A) and the polyol component (B).

Comparative Example 7 that does not contain a crude MDI results in a bad appearance regardless of the coating condition, and the appearance does not improve even when the particles (C) are contained as in Comparative Example 8. In addition, although Comparative Example 9 that contains a crude MDI but does not contain a specific component provides a favorable appearance, a sufficient bonding strength cannot be ensured.

Industrial Applicability

An adhesive composition according to the present invention can be applied in general to use for bonding a substrate to another substrate. In particular, the adhesive composition is useful as a lamination adhesive for forming a packaging material for food, clothing, cosmetics, and so on. In addition, since a solventless adhesive composition can be provided, the adhesive composition is suitable for use when a solvent is not to be used.

**Claims**

1. An adhesive composition, comprising:

   a polyisocyanate component (A); and
   a polyol component (B), wherein
   the polyisocyanate component (A) satisfies all of the following (i) to (iv),

   (i) the polyisocyanate component (A) contains the following component (A1) and a crude MDI (A2),
   (ii) the component (A1) is consisting essentially of a urethane prepolymer obtained by allowing a polyol consisting essentially of a polyether polyol (a1) and an isocyanate component (a2) to react under the condition of excess isocyanate groups with respect to a hydroxyl group in a polyol and may contain an unreacted isocyanate component (a2),
   (iii) the isocyanate component (a2) is consisting essentially of

   - 4,4'-diphenylmethane diisocyanate, or
   - 4,4'-diphenylmethane diisocyanate and at least one type of isocyanate selected from the group consisting of 2,4'-diphenylmethane diisocyanate and tolylene diisocyanate, and

   (iv) the crude MDI (A2) contains at least one type of MDI monomer selected from the group consisting of 4,4'-diphenylmethane diisocyanate, 2,4'-diphenylmethane diisocyanate, and 2,2'-diphenylmethane diisocyanate and polymethylene polyphenylene isocyanate, and the content by percentage of the isocyanate group is less than 33 mass%, and

   the polyol component (B) is a polyol composition that is consisting essentially of a polyester diol (b1) having a number-average molecular weight of no less than 500 nor more than 3,000, and at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

2. The adhesive composition according to Claim 1, wherein

   when the number of moles of the hydroxyl group in the polyol component (B) is 100 moles, the number of moles of the isocyanate group in the polyisocyanate component (A) is no less than 120 moles nor more than 300 moles, and
   the total amount of 4,4'-diphenylmethane diisocyanate, 2,4-diphenylmethane diisocyanate, 2,2'-diphenylmethane diisocyanate, and tolylene diisocyanate contained in the total of 100 mass% of the polyisocyanate component (A) and the polyol component (B) is 4 to 15 mass%.

3. The adhesive composition according to Claim 1 or 2, wherein the isocyanate group content by percentage in the polyisocyanate component (A) is no less than 1.0 mass% and less than 30 mass%.

4. The adhesive composition according to any one of Claims 1 to 3, wherein the total amount of 4,4'-diphenylmethane diisocyanate, 2,4'-diphenylmethane diisocyanate, 2,2'-diphenylmethane diisocyanate, and tolylene diisocyanate contained in 100 mass% of the polyisocyanate component (A) is 10 to 55 mass%.

5. The adhesive composition according to any one of Claims 1 to 4, wherein the isocyanate group content by percentage in the component (A) is no less than 10 mass% and less than 18 mass%.

6. The adhesive composition according to any one of Claims 1 to 5, wherein.
in the total of 100 mass% of 4,4'-diphenylmethane diisocyanate, 2,4'-diphenylmethane diisocyanate, and tolylene diisocyanate, the proportions of 4,4'-diphenylmethane diisocyanate, 2,4'-diphenylmethane diisocyanate, and tolylene diisocyanate used to obtain the component (A) are as follows:

4,4'-diphenylmethane diisocyanate is no less than 40 mol% nor more than 100 mol%,
2,4'-diphenylmethane diisocyanate is no less than 0 mol% and less than 60 mol%, and
tolylene diisocyanate is no less than 0 mol% and less than 60 mol%.

7. The adhesive composition according to any one of Claims 1 to 6, wherein the isocyanate group content by percentage in the crude MDI (A2) is no less than 25 mass% and less than 33 mass%.

8. The adhesive composition according to any one of Claims 1 to 7, wherein polymethylene polyphenylene isocyanate contained in 100 mass% of the crude MDI (A2) is 50 to 70 mass%.

9. The adhesive composition according to any one of Claims 1 to 8, wherein
100 mass% of the polyol component (B) contains
no less than 60 mass% nor more than 99 mass% of the polyester diol (b1), and
no less than 1 mass% nor more than 40 mass% of the diol (b2), the triol (b3), and the polyether diol (b4) in combination.

10. The adhesive composition according to any one of Claims 1 to 9, wherein the adhesive composition is solventless.

11. The adhesive composition according to any one of Claims 1 to 10, wherein the adhesive composition is a lamination adhesive for forming a packaging material.

12. A laminate formed by laminating at least two sheet-like substrates by using the adhesive composition according to any one of Claims 1 to 11.

13. A method of producing a laminate, the method comprising:

coating a first sheet-like substrate with the adhesive composition according to any one of Claims 1 to 11 to form an adhesive layer;
overlaying the adhesive layer with a second sheet-like substrate; and
curing the adhesive layer interposed between the two sheet-like substrates.

14. A method of producing an adhesive composition in which a polyisocyanate component (A) and a polyol component (B) are combined, wherein
the polyisocyanate component (A) satisfies all of the following (i) to (iv),

(i) the polyisocyanate component (A) is obtained by mixing the following component (A1) and a crude MDI (A2),
(ii) the component (A1) is obtained by allowing a polyol consisting essentially of a polyether polyol (a1) and an isocyanate component (a2) to react under the condition of excess isocyanate groups with respect to a hydroxyl group in a polyol, is consisting essentially of a urethane prepolymer, and may contain an unreacted isocyanate component (a2),
(iii) the isocyanate component (a2) consisting essentially of

- 4,4'-diphenylmethane diisocyanate, or
- 4,4'-diphenylmethane diisocyanate and at least one type of isocyanate selected from the group consisting of 2,4'-diphenylmetb.an.e diisocyanate and tolylene diisocyanate, and

(iv) the crude MDI (A2) contains at least one type of MDI monomer selected from the group consisting of 4,4'-diphenylmethane diisocyanate, 2,4'-diphenylmethane diisocyanate, and 2,2'-diphenylmethane diisocyanate and polymethylene polyphenylene isocyanate, and the isocyanate group content by percentage is less than 33 mass%, and

the polyol component (B) is a polyol composition that is consisting essentially of a polyester diol (b1) having a number-average molecular weight of no less than 500 nor more than 3,000, and at least one type selected from the group consisting of a diol (b2) having a number-average molecular weight of no less than 50 and less than 400, a triol (b3) having a number-average molecular weight of no less than 50 and less than 500, and a polyether diol (b4) having a number-average molecular weight of no less than 400 and less than 1000.

15. The method of producing an adhesive composition according to Claim 14, wherein the total of unreacted 4,4'-diphenylmethane diisocyanate, unreacted 2,4'-diphenylmethane diisocyanate, and unreacted tolylene diisocyanate contained in 100 mass% of the component (A1) is 10 to 55 mass%.

**Patentansprüche**

1. Klebstoffzusammensetzung, umfassend:

eine Polyisocyanatkomponente (A); und
eine Polyolkomponente (B), wobei
die Polyisocyanatkomponente (A) alle der folgenden Punkte (i) bis (iv) erfüllt,

(i) die Polyisocyanatkomponente (A) enthält die folgende Komponente (A1) und ein rohes MDI (A2),
(ii) die Komponente (A1) besteht im Wesentlichen aus einem Urethanpräpolymer, das erhalten wird durch Reagieren lassen eines Polyols, das im Wesentlichen aus einem Polyetherpolyol (a1) besteht, und einer Isocyanatkomponente (a2) unter der Bedingung eines Überschusses an Isocyanatgruppen in Bezug auf eine Hydroxylgruppe in einem Polyol, und kann eine nicht umgesetzte Isocyanatkomponente (a2) enthalten,
(iii) die Isocyanatkomponente (a2) besteht im Wesentlichen aus

- 4,4'-Diphenylmethandiisocyanat oder
- 4,4'-Diphenylmethandiisocyanat und zumindest einer Art von Isocyanat, ausgewählt aus der Gruppe bestehend aus 2,4'-Diphenylmethandiisocyanat und Tolylendiisocyanat, und

(iv) das rohe MDI (A2) enthält mindestens eine Art von MDI-Monomer, das aus der Gruppe ausgewählt ist, die aus 4,4'-Diphenylmethandiisocyanat, 2,4'-Diphenylmethandiisocyanat und 2,2'-Diphenylmethandiisocyanat und Polymethylenpolyphenylenisocyanat besteht, und der prozentuale Anteil der Isocyanatgruppe beträgt weniger als 33 Masse-%, und

die Polyolkomponente (B) eine Polyolzusammensetzung ist, die im Wesentlichen aus einem Polyesterdiol (b1) mit einem zahlenmittleren Molekulargewicht von nicht weniger als 500 und nicht mehr als 3.000 und mindestens einem Typ besteht, der aus der Gruppe ausgewählt ist, die aus einem Diol (b2) mit einem zahlenmittleren Molekulargewicht von nicht weniger als 50 und weniger als 400, einem Triol (b3) mit einem zahlenmittleren Molekulargewicht von nicht weniger als 50 und weniger als 500 und einem Polyetherdiol (b4) mit einem zahlenmittleren Molekulargewicht von nicht weniger als 400 und weniger als 1000 besteht.

2. Klebstoffzusammensetzung nach Anspruch 1, wobei

wenn die Molzahl der Hydroxylgruppe in der Polyolkomponente (B) 100 Mol beträgt, die Molzahl der Isocyanatgruppe in der Polyisocyanatkomponente (A) nicht weniger als 120 Mol und nicht mehr als 300 Mol beträgt, und die Gesamtmenge von 4,4'-Diphenylmethandiisocyanat, 2,4'-Diphenylmethandiisocyanat, 2,2'-Diphenylmethandiisocyanat und Tolylendiisocyanat, die in der Gesamtmenge von 100 Masse-% der Polyisocyanatkomponente (A) und der Polyolkomponente (B) enthalten ist, 4 bis 15 Masse-% beträgt.

3. Klebstoffzusammensetzung nach Anspruch 1 oder 2, wobei der prozentuale Isocyanatgruppenanteil in der Polyisocyanatkomponente (A) nicht weniger als 10 Masse-% und weniger als 30 Masse-% beträgt.

4. Klebstoffzusammensetzung nach einem der Ansprüche 1 bis 3, wobei die Gesamtmenge von 4,4'-Diphenylmethandiisocyanat, 2,4'-Diphenylmethandiisocyanat, 2,2'-Diphenylmethandiisocyanat und Tolylendiisocyanat, die in 100 Masse-% der Polyisocyanatkomponente (A) enthalten ist, 10 bis 55 Masse-% beträgt.

5. Klebstoffzusammensetzung nach einem der Ansprüche 1 bis 4, wobei der prozentuale Isocyanatgruppenanteil in der Komponente (A) nicht weniger als 10 Masse-% und weniger als 18 Masse-% beträgt.

6. Klebstoffzusammensetzung nach einem der Ansprüche 1 bis 5, wobei
in der Gesamtmenge von 100 Masse-% von 4,4'-Diphenylmethandiisocyanat, 2,4'-Diphenylmethandiisocyanat und Tolylendiisocyanat die zum Erhalten der Komponente (A) verwendeten Anteile von 4,4'-Diphenylmethandiisocyanat, 2,4'-Diphenylmethandiisocyanat und Tolylendiisocyanat wie folgt sind:

4,4'-Diphenylmethandiisocyanat beträgt nicht weniger als 40 Mol-% und nicht mehr als 100 Mol-%,
2,4'-Diphenylmethandiisocyanat beträgt nicht weniger als 0 Mol-% und weniger als 60 Mol-%, und
Tolylendiisocyanat beträgt nicht weniger als 0 Mol-% und weniger als 60 Mol-%.

7. Klebstoffzusammensetzung nach einem der Ansprüche 1 bis 6, wobei der prozentuale Isocyanatgruppenanteil im rohen MDI (A2) nicht weniger als 25 Masse-% und weniger als 33 Masse-% beträgt.

8. Klebstoffzusammensetzung nach einem der Ansprüche 1 bis 7, wobei
das in 100 Masse-% des rohen MDI (A2) enthaltene Polymethylenpolyphenylenisocyanat 50 bis 70 Masse-% beträgt.

9. Klebstoffzusammensetzung nach einem der Ansprüche 1 bis 8, wobei
100 Masse-% der Polyolkomponente (B) enthalten:

nicht weniger als 60 Masse-% und nicht mehr als 99 Masse-% des Polyesterdiols (b1), und
nicht weniger als 1 Masse-% und nicht mehr als 40 Masse-% des Diols (b2), des Triols (b3) und des Polyetherdiols (b4) in Kombination.

10. Klebstoffzusammensetzung nach einem der Ansprüche 1 bis 9, wobei die Klebstoffzusammensetzung lösungsmittelfrei ist.

11. Klebstoffzusammensetzung nach einem der Ansprüche 1 bis 10, wobei die Klebstoffzusammensetzung ein Laminierungsklebstoff zur Bildung eines Verpackungsmaterials ist.

12. Laminat, gebildet durch Laminieren von mindestens zwei blattartigen Substraten unter Verwendung der Klebstoffzusammensetzung nach einem der Ansprüche 1 bis 11.

13. Verfahren zur Herstellung eines Laminats, wobei das Verfahren umfasst:

Beschichten eines ersten blattartigen Substrats mit der Klebstoffzusammensetzung nach einem der Ansprüche 1 bis 11 zur Bildung einer Klebstoffschicht;
Überziehen der Klebstoffschicht mit einem zweiten blattartigen Substrat; und
Aushärten der zwischen den zwei blattartigen Substraten liegenden Klebstoffschicht.

14. Verfahren zur Herstellung einer Klebstoffzusammensetzung, bei dem eine Polyisocyanatkomponente (A) und eine Polyolkomponente (B) kombiniert werden, wobei

die Polyisocyanatkomponente (A) alle der folgenden Punkte (i) bis (iv) erfüllt,

(i) die Polyisocyanatkomponente (A) wird durch Mischen der folgenden Komponente (A1) und eines rohen MDI (A2) erhalten,
(ii) die Komponente (A1) wird durch Reagieren lassen eines Polyols, das im Wesentlichen aus einem Polyetherpolyol (a1) besteht, und einer Isocyanatkomponente (a2) unter der Bedingung eines Überschusses von Isocyanatgruppen in Bezug auf eine Hydroxylgruppe in einem Polyol erhalten, besteht im Wesentlichen aus einem Urethanpräpolymer und kann eine nicht umgesetzte Isocyanatkomponente (a2) enthalten,

(iii) die Isocyanatkomponente (a2) besteht im Wesentlichen aus

- 4,4'-Diphenylmethandiisocyanat oder
- 4,4'-Diphenylmethandiisocyanat und zumindest einer Art von Isocyanat, ausgewählt aus der Gruppe bestehend aus 2,4'-Diphenylmethandiisocyanat und Tolylendiisocyanat, und

(iv) das rohe MDI (A2) enthält mindestens eine Art von MDI-Monomer, das aus der Gruppe ausgewählt ist, die aus 4,4'-Diphenylmethandiisocyanat, 2,4'-Diphenylmethandiisocyanat und 2,2'-Diphenylmethandiisocyanat und Polymethylenpolyphenylenisocyanat besteht, und der prozentuale Anteil der Isocyanatgruppe beträgt weniger als 33 Masse-%, und

die Polyolkomponente (B) eine Polyolzusammensetzung ist, die im Wesentlichen aus einem Polyesterdiol (b1) mit einem zahlenmittleren Molekulargewicht von nicht weniger als 500 und nicht mehr als 3.000 und mindestens einem Typ besteht, der aus der Gruppe ausgewählt ist, die aus einem Diol (b2) mit einem zahlenmittleren Molekulargewicht von nicht weniger als 50 und weniger als 400, einem Triol (b3) mit einem zahlenmittleren Molekulargewicht von nicht weniger als 50 und weniger als 500 und einem Polyetherdiol (b4) mit einem zahlenmittleren Molekulargewicht von nicht weniger als 400 und weniger als 1000 besteht.

15. Verfahren zur Herstellung einer Klebstoffzusammensetzung nach Anspruch 14, wobei die Gesamtmenge von nicht umgesetztem 4,4'-Diphenylmethandiisocyanat, nicht umgesetztem 2,4'-Diphenylmethandiisocyanat und nicht umgesetztem Tolylendiisocyanat, die in 100 Masse-% der Komponente (A1) enthalten ist, 10 bis 55 Masse-% beträgt.

## Revendications

1. Composition adhésive, comprenant :

un composant polyisocyanate (A) ; et
un composant polyol (B), dans laquelle
le composant polyisocyanate (A) satisfait à toutes les conditions (i) à (iv) suivantes,

(i) le composant polyisocyanate (A) contient le composant (A1) suivant et un MDI brut (A2),
(ii) le composant (A1) se compose essentiellement d'un prépolymère d'uréthane obtenu en laissant un polyol se composant essentiellement d'un polyol de polyéther (a1) et d'un composant isocyanate (a2) réagir dans les conditions d'un excès de groupes isocyanate par rapport à un groupe hydroxyle dans un polyol et peut contenir un composant isocyanate (a2) n'ayant pas réagi,
(iii) le composant isocyanate (a2) se compose essentiellement de

- diisocyanate de 4,4'-diphénylméthane, ou
- diisocyanate de 4,4'-diphénylméthane et au moins un type d'isocyanate choisi dans le groupe constitué par le diisocyanate de 2,4'-diphénylméthane diisocyanate et le diisocyanate de tolylène, et

(iv) le MDI brut (A2) contient au moins un type de monomère de MDI choisi dans le groupe constitué par le diisocyanate de 4,4'-diphénylméthane, le diisocyanate de 2,4'-diphénylméthane et le diisocyanate de 2,2'-diphénylméthane et l'isocyanate de polyméthylène polyphénylène, et la teneur en pourcentage en groupe isocyanate est inférieure à 33 % en masse, et

le composant polyol (B) est une composition de polyols qui se compose essentiellement d'un diol de polyester (b1) ayant un poids moléculaire moyen en nombre non inférieur à 500 ni supérieur à 3 000, et d'au moins un type choisi dans le groupe constitué par un diol (b2) ayant un poids moléculaire moyen en nombre non inférieur à 50 et inférieur à 400, un triol (b3) ayant un poids moléculaire moyen en nombre d'au moins supérieure à 50 et inférieure à 500 et un diol de polyéther (b4) ayant un poids moléculaire moyen en nombre non inférieur à 400 et inférieur à 1 000.

2. Composition adhésive selon la revendication 1, dans laquelle
lorsque le nombre de moles du groupe hydroxyle dans le composant polyol (B) est de 100 moles, le nombre de moles du groupe isocyanate dans le composant polyisocyanate (A) est non inférieur à 120 moles ni supérieur à 300 moles, et

la quantité totale de diisocyanate de 4,4'-diphénylméthane, diisocyanate de 2,4'-diphénylméthane, diisocyanate de 2,2'-diphénylméthane et diisocyanate de tolylène contenus dans 100 % en masse au total du composant polyisocyanate (A) et du composant polyol (B) est de 4 à 15 % en masse.

3. Composition adhésive selon la revendication 1 ou 2, dans laquelle la teneur en groupe isocyanate en pourcentage dans le composant polyisocyanate (A) est non inférieure à 10 % en masse et inférieure à 30 % en masse.

4. Composition adhésive selon l'une quelconque des revendications 1 à 3, dans laquelle la quantité totale de diisocyanate de 4,4'-diphénylméthane, diisocyanate de 2,4'-diphénylméthane, diisocyanate de 2,2'-diphénylméthane et diisocyanate de tolylène contenus dans 100 % en masse du composant polyisocyanate (A) est de 10 à 55 % en masse.

5. Composition adhésive selon l'une quelconque des revendications 1 à 4, dans laquelle la teneur en groupe isocyanate en pourcentage dans le composant (A) est non inférieure à 10 % en masse et inférieure à 18 % en masse.

6. Composition adhésive selon l'une quelconque des revendications 1 à 5, dans laquelle
dans 100 % en masse au total de diisocyanate de 4,4'-diphénylméthane, diisocyanate de 2,4'-diphénylméthane et diisocyanate de tolylène, les proportions de diisocyanate de 4,4'-diphénylméthane, diisocyanate de 2,4'-diphénylméthane et diisocyanate de tolylène utilisées pour obtenir le composant (A) sont les suivantes :

le diisocyanate de 4,4'-diphénylméthane est non inférieur à 40 % en moles ni supérieur à 100 % en moles,
le diisocyanate de 2,4'-diphénylméthane est non inférieur à 0 % en moles et inférieur à 60 % en moles, et
le diisocyanate de tolylène est non inférieur à 0 % en moles et inférieur à 60 % en moles.

7. Composition adhésive selon l'une quelconque des revendications 1 à 6, dans laquelle la teneur en groupe isocyanate en pourcentage dans le MDI brut (A2) est non inférieure à 25 % en masse et inférieure à 33 % en masse.

8. Composition adhésive selon l'une quelconque des revendications 1 à 7, dans laquelle l'isocyanate de polyméthylène polyphénylène contenu dans 100 % en masse du MDI brut (A2) est de 50 à 70 % en masse.

9. Composition adhésive selon l'une quelconque des revendications 1 à 8, dans laquelle
100 % en masse du composant polyol (B) contiennent
pas moins de 60 % en masse ni plus de 99 % en masse du diol de polyester (b1), et
pas moins de 1 % en masse ni plus de 40 % en masse du diol (b2), du triol (b3) et du diol de polyéther (b4) en combinaison.

10. Composition adhésive selon l'une quelconque des revendications 1 à 9, dans laquelle la composition adhésive est exempte de solvant.

11. Composition adhésive selon l'une quelconque des revendications 1 à 10, dans laquelle la composition adhésive est un adhésif de stratification pour former un matériau d'emballage.

12. Stratifié formé par stratification d'au moins deux substrats de type feuille en utilisant la composition adhésive selon l'une quelconque des revendications 1 à 11.

13. Procédé de production d'un stratifié, le procédé comprenant :

le revêtement d'un premier substrat de type feuille avec la composition adhésive selon l'une quelconque des revendications 1 à 11 pour former une couche adhésive ;
la superposition de la couche adhésive avec un second substrat de type feuille ; et
le durcissement de la couche adhésive intercalée entre les deux substrats de type feuille.

14. Procédé de production d'une composition adhésive dans laquelle un composant polyisocyanate (A) et un composant polyol (B) sont combinés, dans lequel
le composant polyisocyanate (A) satisfait à toutes les conditions (i) à (iv) suivantes,

(i) le composant polyisocyanate (A) est obtenu par mélange du composant (A1) suivant et d'un MDI brut (A2),
(ii) le composant (A1) est obtenu en laissant un polyol se composant essentiellement d'un polyol de polyéther (a1) et d'un composant isocyanate (a2) réagir dans les conditions d'un excès de groupes isocyanate par rapport à un groupe hydroxyle dans un polyol, se compose essentiellement d'un prépolymère d'uréthane et peut contenir un composant isocyanate (a2) n'ayant pas réagi,

(iii) le composant isocyanate (a2) se compose essentiellement de

- diisocyanate de 4,4'-diphénylméthane, ou
- diisocyanate de 4,4'-diphénylméthane et au moins un type d'isocyanate choisi dans le groupe constitué par le diisocyanate de 2,4'-diphénylméthane diisocyanate et le diisocyanate de tolylène, et

(iv) le MDI brut (A2) contient au moins un type de monomère de MDI choisi dans le groupe constitué par le diisocyanate de 4,4'-diphénylméthane, le diisocyanate de 2,4'-diphénylméthane et le diisocyanate de 2,2'-diphénylméthane et l'isocyanate de polyméthylène polyphénylène, et la teneur en pourcentage en groupe isocyanate est inférieure à 33 % en masse, et

le composant polyol (B) est une composition de polyols qui se compose essentiellement d'un diol de polyester (b1) ayant un poids moléculaire moyen en nombre non inférieur à 500 ni supérieur à 3 000, et d'au moins un type choisi dans le groupe constitué par un diol (b2) ayant un poids moléculaire moyen en nombre non inférieur à 50 et inférieur à 400, un triol (b3) ayant un poids moléculaire moyen en nombre d'au moins supérieure à 50 et inférieure à 500 et un diol de polyéther (b4) ayant un poids moléculaire moyen en nombre non inférieur à 400 et inférieur à 1 000.

15. Procédé de production d'une composition adhésive selon la revendication 14, dans lequel le total de diisocyanate de 4,4'-diphénylméthane n'ayant pas réagi, de diisocyanate de 2,4'-diphénylméthane n'ayant pas réagi et de diisocyanate de tolylène n'ayant pas réagi contenus dans 100% en masse du composant (A1) est de 10 à 55 % en masse.

**EP 3 284 794 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009073949 A
- JP H860131 B
- JP 2003096428 A
- JP 2006057089 A
- JP 2011162579 A
- JP 2012131980 A
- JP 2014159548 A
- JP 2014502644 PCT